# EUROPÄISCHE PATENTSCHRIFT

(11) **EP 4 406 982 B1**
(45) Veröffentlichungstag und Bekanntmachung des Hinweises auf die Patenterteilung: **05.08.2026**
(21) Anmeldenummer: 24176581.7
(22) Anmeldetag: 29.11.2011
(51) Int. Cl.: C08F 8/00, C08F 10/10, C08F 4/26, C08F 4/14, C08F 4/06, C09D 5/00, C08F 110/10

(54) **HERSTELLUNG VON ISOBUTENHOMO- ODER -COPOLYMER-DERIVATEN**
PRODUCTION OF ISOBUTYLENE HOMO- OR COPOLYMER DERIVATIVES
PRODUCTION DE DÉRIVÉS D'HOMO OU DE COPOLYMÈRES D'ISOBUTÈNE

(30) Priorität: 30.11.2010 EP 10193053; 11.08.2011 EP 11177325
(43) Veröffentlichungstag der Anmeldung: 31.07.2024
(62) Teilanmeldung aus: 11788494.0
(73) Patentinhaber: BASF SE, 67056 Ludwigshafen am Rhein (DE)
(72) Erfinder: Koenig, Hannah Maria, Ludwigshafen am Rhein (DE); Muehlbach, Klaus, Gruenstadt (DE); Mach, Helmut, Heidelberg (DE); Eichenauer, Ulrich, Boehl-Iggelheim (DE)
(74) Vertreter: BASF IP Association

(56) Entgegenhaltungen:
- EP-A1- 0 831 141
- EP-A2- 0 244 616
- WO-A1-2006/011868
- WO-A1-2007/025700
- DE-A1- 2 702 604
- US-A- 4 316 973
- US-A- 5 340 881
- QIANG LIU ET AL: "Polyisobutylene with High exo -Olefin Content via [beta]-H Elimination in the Cationic Polymerization of Isobutylene with H2O/FeCl3 /Dialkyl Ether Initiating System", MACROMOLECULES, vol. 44, no. 7, 12 April 2011 (2011-04-12), pages 1866 - 1875, XP055023424, ISSN: 0024-9297, DOI: 10.1021/ma1027017
- DATABASE WPI Week 201132, Derwent World Patents Index; AN 2011-D00644, XP002672669
- LIU Q ET AL: "A cost-effective process for highly reactive polyisobutylenes via cationic polymerization coinitiated by AlCl3", POLYMER, ELSEVIER SCIENCE PUBLISHERS B.V, GB, vol. 51, no. 25, 26 November 2010 (2010-11-26), pages 5960 - 5969, XP027506637, ISSN: 0032-3861, [retrieved on 20101016], DOI: 10.1016/J.POLYMER.2010.10.012
- IRINA V. VASILENKO ET AL: "Cationic Polymerization of Isobutylene Using AlCl 3 OBu 2 as a Coinitiator: Synthesis of Highly Reactive Polyisobutylene", MACROMOLECULES, vol. 43, no. 13, 13 July 2010 (2010-07-13), pages 5503 - 5507, XP055034234, ISSN: 0024-9297, DOI: 10.1021/ma1009275
- NGUYEN HUNG ANH ET AL: "CATIONIC POLYMERIZATION OF ISOBUTYLENE INITIATED BY DIOL/BORON TRICHLORIDE SYSTEMS.", POLYMER BULLETIN 1984 FEB, vol. 11, no. 2, February 1984 (1984-02-01), pages 99 - 104, XP002681059

## Beschreibung

Die vorliegende Erfindung betrifft ein verbessertes Verfahren zur Herstellung von Isobutenhomo- oder -copolymer-Derivaten. Weiterhin betrifft die vorliegende Erfindung neue Isobutenhomopolymer-Derivate.

Isobutenhomo- oder -copolymer-Derivate wie Polyisobutenamine oder Polyisobutenylsuccinanhydride werden häufig aus sogenannten hochreaktiven Isobutenhomo- oder -copolymeren gewonnen. Unter hochreaktiven Isobutenhomo- oder - copolymeren versteht man im Unterschied zu den sogenannten niedrigreaktiven Polymeren solche Polyisobutene, die einen hohen Gehalt an terminal angeordneten ethylenischen Doppelbindungen (*α*-Doppelbindungen) enthalten, und zwar in der Praxis von 80 Mol-% oder mehr, bezogen auf die einzelnen Kettenenden der Poly-isobuten-Makromoleküle. Unter Vinylidengruppen werden normalerweise solche Doppelbindungen verstanden, deren Lage im Polyisobuten-Makromolekül durch die allgemeine Formel 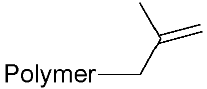 beschrieben wird, d.h. die Doppelbindung befindet sich in der Polymerkette in einer *α*-Stellung. "Polymer" steht für den um eine Isobuteneinheit verkürzten Polyisobutenrest. Die Vinylidengruppen zeigen die höchste Reaktivität, beispielsweise bei der thermischen Addition an sterisch anspruchsvolle Reaktionspartner wie Maleinsäureanhydrid, wohingegen eine weiter im Inneren der Makromoleküle liegende Doppelbindung in den meisten Fällen keine oder geringere Reaktivität bei Funktionalisierungsreaktionen zeigt.

Derartige hochreaktive Polyisobutene werden unter anderem als Zwischenprodukte zur Herstellung von Additiven für Schmier- und Kraftstoffe verwendet, zum Beispiel werden sie gemäß der Lehre der DE-A 27 02 604 mit Maleinsäureanhydrid zu Polyisobutenylsuccinanhydriden umgesetzt. Die nach dem Verfahren der DE-A 27 02 604 durch kationische Polymerisation von Isobuten in flüssiger Phase in Gegenwart von Bortrifluorid als Katalysator erhältlichen hochreaktiven Polyisobutene haben jedoch einige Nachteile, beispielsweise weisen sie eine relativ hohe Polydispersität auf. Die Polydispersität ist ein Maß für die Molekulargewichtsverteilung der erhaltenen Polymerketten und entspricht dem Quotient aus gewichtsmittlerem Molekulargewicht M_{w} und zahlenmittlerem Molekulargewicht Mₙ (PDI = M_{w}/Mₙ).

Polyisobutene mit einem ähnlich hohen Anteil an endständigen Doppelbindungen, jedoch mit einer engeren Molekulargewichtsverteilung sind beispielsweise nach dem Verfahren der EP-A 145 235, US 5 408 018 sowie WO 99/64482 erhältlich, wobei die Polymerisation in Gegenwart eines desaktivierten Katalysators, zum Beispiel eines Komplexes von Bortrifluorid mit Alkoholen und/oder Ethern, erfolgt.

Hochreaktive Polyisobutene sind auch durch lebende kationische Polymerisation von Isobuten und anschließender Dehydrohalogenierung des erhaltenen Polymerisationsprodukts erhältlich, beispielsweise gemäß dem Verfahren aus der US 5 340 881. Ein solches Verfahren ist jedoch aufwendig, da die mit der lebenden kationischen Polymerisation eingeführte Halogenendgruppe in einem separaten Schritt abgespalten werden muß, um die Doppelbindung zu generieren.

Es ist weiterhin seit langem bekannt, dass auch die Lewis-Säure Aluminiumtrichlorid als Polymerisationskatalysator für Isobuten verwendet werden kann, beispielsweise aus High Polymers, Band XXIV (Teil 2), S. 713-733 (Herausgeber: Edward C. Leonard), Verlag J. Wiley & Sons, New York, 1971.

In der noch nicht offengelegten europäischen Patentanmeldung mit dem Aktenzeichen 10157068.7 wird ein Verfahren zur Herstellung von hochreaktiven Isobutenhomo- oder -copolymeren durch Polymerisation in Gegenwart eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion sowie gegebenenfalls eine organische Hydroxyverbindung, eine organischen Halogenverbindung oder Wasser als Initiator enthält, offenbart. Weitere Umsetzungen mit den so hergestellten hochreaktiven Isobutenhomo- oder - copolymeren werden dort nicht beschrieben.

Aus der CN 101955558 A ist bekannt, dass sich Eisen(III)-chlorid als Coinitiator bei der kationischen Isobuten-Polymerisation zur Herstellung hochreaktiver Polyisobutene und deren Copolymeren eignet. Als Initiatoren werden Wasser, Phenole, Protonensäuren wie Schwefelsäure, tertiäre Alkohole, tertiäre Chloride, tertiäre Carbonsäureester sowie Carbonsäuren selbst empfohlen. Als Komplexierungsmittel für die die Polymerisation initiierenden Systeme werden insbesondere Alkylether genannt.

Die aus dem Stand der Technik bekannten Derivatisierungsmethoden von hochreaktiven Isobutenhomo- oder -copolymeren, beispielsweise zur Darstellung von Polyisobutenylsuccinanhydriden gemäß der Lehre der DE-A 27 02 604, weisen jedoch eine Reihe von Mängeln auf. So ist der Gehalt an endständigen Vinyliden-Doppelbindungen in der Vorstufe immer noch zu niedrig. Die Ausbeuten bei der Umsetzung zu den Derivaten sind verbesserungsbedürftig. Das Aussehen und die Konsistenz der Derivate, insbesondere die Unterdrückung von Verfärbung, beispielsweise hervorgerufen durch unerwünschte Verkokungsreaktionen bei thermischer Belastung während der Derivatisierung, sind noch nicht optimal. Weiterhin sind die physikalischen Eigenschaften der Derivate, insbesondere das Viskositätsverhalten bei tiefen Temperaturen, wie sie beispielsweise beim praktischen Einsatz in Schmierölen auftreten können, sowie die Löslichkeiten, insbesondere in polaren Medien, die Temperaturstabiliät und die Lagerstabilität der Derivate noch verbesserungsbedürftig. Die aus dem Stand der Technik bekannten Derivatisierungsverfahren von Isobutenpolymeren, welche von mittels fluorhaltigen Polymerisationskatalysatoren hergestellten Isobutenpolymeren ausgehen, haben den Nachteil, dass sie aufgrund des Restfluorgehaltes Korrosion auf zahlreichen metallischen Materialien und Stahlsorten auslösen.

Aufgabe der vorliegenden Erfindung war es, ausgehend von hochreaktiven Isobutenhomo- oder -copolymeren, ein verbessertes Verfahren zur Herstellung von Isobutenhomo- oder -copolymer-Derivaten bereitzustellen, welches die Mängel des Standes der Technik nicht mehr aufweist. Insbesondere sollen die Isobutenhomo- oder -copolymer-Derivate aus Isobutenpolymeren mit einem hohen Gehalt an terminalen Vinyliden-Doppelbindungen, insbesondere wenigstens 50 Mol-%, vorzugsweise wenigstens 60 Mol-%, vorzugsweise wenigstens 70 Mol-%, vorzugsweise wenigstens 80 Mol-%, vorzugsweise wenigstens 85 Mol-%, besonders bevorzugt wenigstens 90 Mol-%, und in akzeptablen Ausbeuten hergestellt werden können. Weiterhin sollen Aussehen und die Konsistenz der Derivate, beispielsweise deren Farbe, verbessert werden. Weiterhin sollen die physikalischen Eigenschaften der Derivate, insbesondere das Viskositätsverhalten bei tiefen Temperaturen, sowie die Löslichkeiten, insbesondere in polaren Medien, die Temperaturstabiliät und die Lagerstabilität der Derivate verbessert werden. Ein verwendetes Katalysatorsystem für die Erzeugung der Isobutenpolymeren in der Vorstufe soll dabei ausreichend aktiv, langlebig, unproblematisch in der Handhabung und störungsunanfällig sein, insbesondere soll es frei von Fluor sein, um unerwünschte aufgrund von Restfluorgehalt bedingte Korrosion auf metallischen Materialien und Stahlsorten zu vermeiden.

Die Aufgabe wurde gelöst durch ein Verfahren zur Herstellung von Isobutenhomo- oder -copolymer-Derivaten der allgemeinen Formel I

POL(-A), (I)

in der
POL den n-funktionellen Rest eines hydrophoben Polyisobutenhomo- oder - copolymeren mit einem zahlengemittelten Molekulargewicht (Mₙ) von 110 bis 250.000 bezeichnet, welcher Struktureinheiten aus mono-, di- oder trifunktionellen Initiatoren eingebaut enthalten kann,
A eine niedermolekulare polare Gruppe, welche jeweils eine oder mehrere Aminofunktionen und/oder Hydroxylgruppen und/oder Carbonsäure- oder - Carbonsäurederivatfunktionen, insbesondere Bernstein-säureanhydrid- oder Bernsteinsäurederivatfunktionen enthält, bedeutet und
die Variable n für die Zahl 1, 2 oder 3 steht, wobei bei n = 2 und n = 3 die Variablen A gleich oder verschieden sein können,
(a) Mono- oder Polyaminogruppen mit bis zu 6 Stickstoffatomen, wobei mindestens ein Stickstoffatom basische Eigenschaften hat;
(h) Bernsteinsäureanhydrid oder aus Bernsteinsäureanhydrid abgeleiteten Gruppierungen mit Hydroxy- und/oder Amino- und/oder quaternisierten Amino- und/oder Amido- und/oder Imidogruppen, die durch thermische oder halogenkatalysierte Maleinierung der innenständigen Doppelbindung(en) und der terminalen Vinyliden-Doppelbindung(en) der POL zugrundeliegenden Polyisobutenhomo- oder -copolymeren mit Maleinsäureanhydrid und im Falle von aus Bernsteinsäureanhydrid abgeleiteten Gruppierungen mit Hydroxy- und/oder Amino- und/oder quaternisierten Amino- und/oder Amido- und/oder Imidogruppen durch entsprechende Folgereaktionen hergestellt wurden, wobei ein resultierendes Carbonsäureamid- oder Carbonsäureimid-Derivat noch durch weitere Umsetzung mit mindestens einem C₂-bis C₁₂-Dicarbonsäureanhydrid, mit mindestens einem C₂- bis C₄-Alkylencarbonat und/oder mit Borsäure modifiziert werden kann;
(j) durch Mannich-Umsetzung von durch POL substituierten Phenolen mit Aldehyden und Mono- oder Polyaminen erzeugten Gruppierungen;
(k) Phenol-, Alkylphenol- oder (Hydroxyalkyl)-phenol-Gruppierungen;
welches dadurch gekennzeichnet ist, dass man Isobuten oder ein Isobuten enthaltendes Monomerengemisch in Gegenwart
(A) eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion enthält,
polymerisiert, das resultierende hochreaktive Isobutenhomo- oder -copolymer, welches einen Gehalt von wenigstens 50 Mol-% an terminalen Vinyliden-Doppelbindungen pro Polyisobuten-Kettenende aufweist, mit mindestens n Äquivalenten einer die niedermolekulare polare Gruppe A oder eine Teilstruktur der niedermolekularen polaren Gruppe A einführenden Verbindung umsetzt und im Falle der Umsetzung mit einer Teilstruktur die Bildung der niedermolekularen polaren Gruppe A durch Folgereaktionen vervollständigt.

Die genannte hierbei erfindungswesentliche Polymerisationsmethode für Isobuten oder Isobuten enthaltende Monomerengemische gemäß Ausführungsform (A) ist im wesentlichen in der oben zitierten noch nicht offengelegten europäischen Patentanmeldung mit dem Aktenzeichen 10157068.7 beschrieben und wird nachfolgend wiedergegeben.

Unter Isobutenhomopolymeren versteht man im Rahmen der vorliegenden Erfindung solche Polymere, die bezogen auf das Polymer zu wenigstens 98 Mol-%, vorzugsweise zu wenigstens 99 Mol-% aus Isobuten aufgebaut sind. Dementsprechend versteht man unter Isobutencopolymeren solche Polymere, die mehr als 2 Mol-% Monomere einpolymerisiert enthalten, die von Isobuten verschieden sind, beispielsweise lineare Butene.

Im Rahmen der vorliegenden Erfindung gelten für generisch definierte Reste folgende Definitionen:
Ein C₁- bis C₈-Alkylrest ist ein linearer oder verzweigter Alkylrest mit 1 bis 8 Kohlenstoffatomen. Beispiele hierfür sind Methyl, Ethyl, n-Propyl, Isopropyl, n-Butyl, 2-Butyl, Isobutyl, tert.-Butyl, Pentyl, 1-Methylbutyl, 2-Methylbutyl, 3-Methylbutyl, 2,2-Dimethyl-propyl, 1-Ethylpropyl, n-Hexyl, 1,1-Dimethylpropyl, 1,2-Dimethylpropyl, 1-Methylpentyl, 2-Methylpentyl, 3-Methyl-pentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methyl-propyl, n-Heptyl, n-Octyl und dessen Konstitutionsisomere wie 2-Ethyl-hexyl. Derartige C₁- bis C₈-Alkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.

Ein C₁- bis C₂₀-Alkylrest ist ein linearer oder verzweigter Alkylrest mit 1 bis 20 Kohlenstoffatomen. Beispiele hierfür sind die oben genannten C₁- bis C₈-Alkylreste und darüber hinaus n-Nonyl, iso-Nonyl, n-Decyl, 2-Propylheptyl, n-Undecyl, n-Dodecyl, n-Tri-decyl, iso-Tridecyl, n-Tetradecyl, n-Hexadecyl, n-Octadecyl und n-Eicosyl. Derartige C₁- bis C₂₀-Alkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.

Ein C₅- bis C₈-Cycloalkylrest ist ein gesättigter cyclischer Rest, der Alkylseitenketten enthalten kann. Beispiele hierfür sind Cyclopentyl, 2- oder 3-Methylcyclopentyl, 2,3-, 2,4- oder 2,5-Dimethylcyclopentyl, Cyclohexyl, 2-, 3- oder 4-Methylcyclohexyl, 2,3-, 2,4-, 2,5-, 2,6-, 3,4-, 3,5- oder 3,6-Dimethylcyclohexyl, Cylcoheptyl, 2-, 3- oder 4-Methylcycloheptyl, Cyclooctyl, 2-, 3-, 4- oder 5-Methylcyclooctyl. Derartige C₅-bis C₈-Cycloalkylreste können auch in geringem Umfang Heteroatome wie Sauerstoff, Stickstoff oder Halogenatome, beispielsweise Chlor, und/oder nicht-protische funktionelle Gruppen wie beispielsweise Carboxylestergruppen, Cyanogruppen oder Nitrogruppen enthalten.

Ein C₆- bis C₂₀-Arylrest bzw. ein C₆- bis C₁₂-Arylrest steht vorzugsweise für gegebenenfalls substituiertes Phenyl, gegebenenfalls substituiertes Naphthyl, gegebenenfalls substituiertes Anthracenyl oder gegebenenfalls substituiertes Phenanthrenyl. Derartige Arylreste können 1 bis 5 nicht-protische Substituenten oder nicht-protische funktionelle Gruppen tragen, beispielsweise C₁- bis C₈-Alkyl, C₁- bis C₈-Halogenalkyl wie C₁- bis C₈-Chloralkyl oder C₁- bis C₈-Fluoralkyl, Halogen wie Chlor oder Fluor, Nitro, Cyano oder Phenyl. Beispiele für solche Arylreste sind Phenyl, Naphthyl, Biphenyl, Anthracenyl, Phenanthrenyl, Tolyl, Nitrophenyl, Chlorphenyl, Dichlorphenyl, Pentafluorphenyl, Pentachlorphenyl, (Trifluormethyl)phenyl, Bis(trifluormethyl)phenyl, (Trichlor)methyl-phenyl und Bis(trichlormethyl)phenyl.

Ein C₇- bis C₂₀-Arylalkylrest bzw. ein C₇- bis C₁₂-Arylalkylrest steht vorzugsweise für gegebenenfalls substituiertes C₁- bis C₄-Alkylphenyl wie Benzyl, o-, m- oder p-Methyl-benzyl, 1- oder 2-Phenylethyl, 1-, 2- oder 3-Phenylpropyl oder 1-, 2-, 3- oder 4-Phenyl-butyl, für gegebenenfalls substituiertes C₁- bis C₄-Alkylnaphthyl wie Naphthylmethyl, für gegebenenfalls substituiertes C₁- bis C₄-Alkylanthracenyl wie Anthracenylmethyl oder für gegebenenfalls substituiertes C₁- bis C₄-Alkylphenanthrenyl wie Phenanthrenylmethyl. Derartige Arylalkylreste können 1 bis 5 nicht-protische Substituenten oder nicht-protische funktionelle Gruppen, insbesondere am Aryl-Teil, tragen, beispielsweise C₁- bis C₈-Alkyl, C₁- bis C₈-Halogenalkyl wie C₁- bis C₈-Chloralkyl oder C₁- bis C₈-Fluor-alkyl, Halogen wie Chlor oder Fluor, Nitro oder Phenyl.

Als Aluminiumtrihalogenid eignet sich insbesondere Aluminiumtrifluorid, Aluminium-trichlorid oder Aluminiumtribromid. Als Aluminiumalkylhalogenid kommt insbesondere ein Mono(C₁- bis C₄-alkyl)aluminiumdihalogenid oder ein Di(C₁- bis C₄-alkyl)aluminium-monohalogenid in Betracht, zum Beispiel Methylaluminiumdichlorid, Ethylaluminiumdichlorid, Dimethylaluminiumchlorid oder Diethylaluminiumchlorid. In einer bevorzugten Ausführungsform polymerisiert man Isobuten oder ein Isobuten enthaltendes Monomerengemisch in Gegenwart eines als Polymerisationskatalysator wirksamen Aluminiumtrichlorid-Donor-Komplexes.

Weist der als Polymerisationskatalysator wirksame Aluminiumtrihalogenid-Donor-Komplex oder Aluminumalkylhalogenid-Donor-Komplex als Donor eine organische Verbindung mit mindestens einer Ether-Funktion auf, sind unter Verbindungen mit mindestens einer Ether-Funktion auch Acetale und Halbacetale zu verstehen.

In einer bevorzugten Ausführungsform der vorliegenden Erfindung setzt man einen Aluminiumtrihalogenid-Donor-Komplex oder einen Aluminiumalkylhalogenid-Donor-Komplex, insbesondere einen Aluminiumtrichlorid-Donor-Komplex, ein, welcher als Donor einen Dihydrocarbylether der allgemeinen Formel R¹-O-R² enthält, in der die Variablen R¹ und R² unabhängig voneinander C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇-bis C₁₂-Arylalkylreste, bezeichnen.

Die genannten Dihydrocarbylether können offenkettig oder cyclisch sein, wobei sich bei den cyclischen die beiden Variablen R¹ und R² zu einem Ring schließen, wobei solche Ringe auch zwei oder drei Ethersauerstoffatom enthalten können. Beispiele für derartige offenkettige und cyclische Dihydrocarbylether sind Dimethylether, Diethylether, Di-n-propylether, Diisopropylether, Di-n-butylether, Di-sec.-butylether, Diisobutyl-ether, Di-n-pentylether, Di-n-hexylether, Di-n-heptylether, Di-n-octylether, Di-(2-ethylhexyl)ether, Methyl-n-butylether, Methyl-sec.-butylether, Methyl-isobutylether, Methyl-tert.-butyl-ether, Ethyl-n-butylether, Ethyl-sec.-butylether, Ethyl-isobutylether, n-Propyl-n-butyl-ether, n-Propyl-sec.-butylether, n-Propyl-isobutylether, n-Propyl-tert.-butylether, Iso-propyl-n-butylether, Isopropyl-sec.-butylether, Isopropyl-isobutylether, Isopropyl-tert.-butylether, Methyl-n-hexylether, Methyl-n-octylether, Methyl-(2-ethylhexyl)ether, Ethyl-n-hexylether, Ethyl-n-octylether, Ethyl-(2-ethylhexyl)ether, n-Butyl-n-octylether, n-Butyl-(2-ethylhexyl)ether, Tetrahydrofuran, Tetrahydropyran, 1,2-, 1,3-und 1,4-Dioxan, Dicylcohexylether, Diphenylether, Ditolylether, Dixylylether und Dibenzylether. Von den genannten Dihydrocarbylethern haben sich Di-n-butylether und Diphenylether als Donoren für die die Aluminiumtrihalogenid-Donor-Komplexe bzw. die Aluminiumalkylhalogenid-Donor-Komplexe, insbesondere die Aluminiumtrichlorid-Donor-Komplexe, als besonders vorteilhaft herausgestellt.

In einer weiteren bevorzugten Ausführungsform der vorliegenden Erfindung setzt man alternativ einen Aluminiumtrihalogenid-Donor-Komplex oder einen Aluminiumalkylhalogenid-Donor-Komplex, insbesondere einen Aluminiumtrichlorid-Donor-Komplex, ein, welcher als Donor einen Carbonsäurehydrocarbylester der allgemeinen Formel R³-COOR⁴ enthält, in der die Variablen R³ und R⁴ unabhängig voneinander C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇-bis C₂₀-Arylalkylreste, insbesondere C₇- bis C₁₂-Arylalkylreste, bezeichnen.

Beispiele für die genannten Carbonsäurehydrocarbylester sind Ameisensäuremethylester, Ameisensäure-ethylester, Ameisensäure-n-propylester, Ameisensäure-isopropylester, Ameisensäure-n-butylester, Ameisensäure-sec.-butylester, Ameisensäure-isobu-tylester, Ameisensäure-tert.-butylester, Essigsäuremethylester, Essigsäure-ethylester, Essigsäure-n-propylester, Essigsäureisopropylester, Essigsäure-n-butylester, Essigsäure-sec.-butylester, Essigsäureisobutylester, Essigsäure-tert.-butylester, Propionsäure-methylester, Propionsäureethylester, Propionsäure-n-propylester, Propionsäure-isopropylester, Propionsäure-n-butylester, Propionsäure-sec.-butylester, Propionsäure-isobutylester, Propionsäure-tert.-butylester, Buttersäure-methylester, Buttersäure-ethylester, Buttersäure-n-propylester, Buttersäure-isopropylester, Buttersäure-n-butylester, Buttersäure-sec.-butylester, Buttersäure-isobutylester, Buttersäure-tert.-butylester, Cyclohexancarbonsäure-methylester, Cyclohexancarbonsäure-ethylester, Cyclohexancarbonsäure-n-propylester, Cyclohexancarbonsäure-isopropylester, Cyclohexancarbonsäure-n-butylester, Cyclohexancarbonsäure-sec.-butylester, Cyclohexancarbonsäure-isobutylester, Cyclohexancarbonsäure-tert.-butylester, Benzoesäuremethylester, Benzoesäure-ethylester, Benzoesäure-n-propylester, Benzoesäureiso-propylester, Benzoesäure-n-butylester, Benzoesäure-sec.-butylester, Benzoesäure-isobutylester, Benzoesäure-tert.-butylester, Phenylessigsäure-methylester, Phenylessigsäure-ethylester, Phenylessigsäure-n-propylester, Phenylessigsäureisopropylester, Phenylessigsäure-n-butylester, Phenylessigsäure-sec.-butylester, Phenylessigsäure-isobutylester und Phenylessigsäure-tert.-butylester. Von den genannten Carbonsäurehydrocarbylestern hat sich Essigsäureethylester als Donor für die Aluminiumtrihalogenid-Donor-Komplexe bzw. die Aluminiumalkylhalogenid-Donor-Komplexe, insbesondere die Aluminiumtrichlorid-Donor-Komplexe, als besonders vorteilhaft herausgestellt.

Weiterhin haben sich diejenigen Dihydrocarbylether und Carbonsäurehydrocarbylester als Donoren für die Aluminiumtrihalogenid-Donor-Komplexe bzw. die Aluminiumalkylhalogenid-Donor-Komplexe, insbesondere die Aluminiumtrichlorid-Donor-Komplexe, als besonders vorteilhaft herausgestellt, bei denen die Donor-Verbindung eine Gesamt-Kohlenstoffzahl von 3 bis 16, vorzugsweise von 4 bis 16, insbesondere von 4 bis 12, vor allem von 4 bis 8, aufweist. Bei den Dihydrocarbylethern speziell werden vor allem solche mit insgesamt 6 bis 14, insbesondere 8 bis 12 Kohlenstoffatomen bevorzugt. Bei den Carbonsäurehydrocarbylestern speziell werden vor allem solche mit insgesamt 3 bis 10, insbesondere 4 bis 6 Kohlenstoffatomen bevorzugt.

Das Molverhältnis der genannten Donor-Verbindungen zum Aluminiumtrihalogenid bzw. zum Aluminiumalkylhalogenid, insbesondere zum Aluminiumtrichlorid, im Donor-Komplex bewegt sich in der Regel im Bereich von 0,3 : 1 bis 1,5 : 1, insbesondere von 0,5 : 1 bis 1,2 : 1, vor allem 0,7 : 1 bis 1,1 : 1; es beträgt in den meisten Fällen 1:1. Es kann jedoch auch mit einem stärkerem Überschluß der Donor-Verbindungen, oftmals bis zum einem 10-fachen, insbesondere 3-fachen molaren Überschuß, gearbeitet werden; die überschüssige Menge an Donor-Verbindungen wirkt dann zusätzlich als Lösungs- oder Verdünnungsmittel.

Üblicherweise wird der Aluminiumtrihalogenid-Donor-Komplex bzw. der Aluminiumalkylhalogenid-Donor-Komplex, insbesondere der Aluminiumtrichlorid-Donor-Komplex, vor der Polymerisation separat aus dem Aluminiumtrihalogenid bzw. dem Aluminiumalkylhalogenid, insbesondere aus wasserfreiem Aluminiumtrichlorid, und der Donor-Verbindung hergestellt und dann - meist gelöst in einem inerten Lösungsmittel wie einem halogenierten Kohlenwasserstoff, beispielsweise Dichlormethan - dem Polymerisationsmedium zugesetzt. Der Komplex kann aber auch *in situ* vor her Polymerisation hergestellt werden.

In einer bevorzugten Ausführungsform der vorliegenden Erfindung führt man die Polymerisation unter Mitverwendung eines mono- oder polyfunktionellen, insbesondere mono-, di- oder trifunktionellen Initiators durchführt, welcher ausgewählt ist unter organischen Hydroxyverbindungen, organischen Halogenverbindungen, Protonensäuren und Wasser. Es können auch Mischungen der genannten Initiatoren eingesetzt werden, beispielsweise Mischungen aus zwei oder mehreren organischen Hydroxyverbindungen, Mischungen aus zwei oder mehreren organischen Halogenverbindungen, Mischungen aus einer oder mehreren organischen Hydroxyverbindungen und einer oder mehreren organischen Halogenverbindungen, Mischungen aus einer oder mehreren organischen Hydroxyverbindungen und Wasser, Mischungen aus einer oder mehreren organischen Halogenverbindungen und Wasser oder Mischungen aus einer oder mehreren Protonensäuren und Wasser. Der Initiator kann mono-, di- oder polyfunktionell sein, d.h. im Initiatormolekül können jeweils eine, zwei oder mehrere Hydroxylgruppen bzw. Halogenatome vorliegen, an denen die Polymerisationsreaktion startet. Im Falle von di- oder polyfunktionellen Initiatoren erhält man üblicherweise telechele Isobutenpolymere mit zwei oder mehreren, insbesondere zwei oder drei Polyisobuten-Kettenenden.

Als monofunktionelle Initiatoren geeignete organische Hydroxyverbindungen mit nur einer Hydroxylgruppe im Molekül sind insbesondere Alkohole und Phenole zu nennen, vor allem solche der allgemeinen Formel R⁵-OH, in der R⁵ C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇- bis C₁₂-Arylalkylreste, bezeichnet. Weiterhin können die Reste R⁵ auch Mischungen aus den oben genannten Strukturen enthalten und/oder weitere funktionelle Gruppen als die bereits genannten, beispielsweise eine Ketofunktion, ein Nitroxid oder eine Carboxylgruppe, und/oder heterocyclische Strukturelemente aufweisen.

Typische Beispiele für derartige organische Monohydroxyverbindungen sind Methanol, Ethanol, n-Propanol, Isopropanol, n-Butanol, sec.-Butanol, Isobutanol, tert.-Butanol, n-Pentanol, n-Hexanol, n-Heptanol, n-Octanol, 2-Ethylhexanol, Cyclohexanol, Phenol, p-Methoxyphenol, o-, m- und p-Kresol, Benzylalkohol, p-Methoxybenzylalkohol, 1- und 2-Phenylethanol, 1- und 2-(p-Methoxyphenyl)ethanol, 1-, 2- und 3-Phenyl-1-propanol, 1-, 2- und 3-(p-Methoxyphenyl)-1-propanol, 1- und 2-Phenyl-2-propanol, 1- und 2-(p-Methoxyphenyl)-2-propanol, 1-, 2-, 3- und 4-Phenyl-1-butanol, 1-, 2-, 3- und 4-(p-Methoxy-phenyl)-1-butanol, 1-, 2-, 3- und 4-Phenyl-2-butanol, 1-, 2-, 3- und 4-(p-Methoxyphe-nyl)-2-butanol, 9-Methyl-9H-fluoren-9-ol, 1,1-Diphenylethanol, 1,1-Diphenyl-2-propyn-1-ol, 1,1-Diphenylpropanol, 4-(1-Hydroxy-1-phenylethyl)benzonitril, Cyclopropyldiphenyl-methanol, 1-Hydroxy-1,1-diphenylpropan-2-on, Benzilsäure, 9-Phenyl-9-fluorenol, Tri-phenylmethanol, Diphenyl(4-pyridinyl)methanol, alpha,alpha-Diphenyl-2-pyridinmethanol, 4-Methoxytritylalkohol (insbesondere polymergebunden als Festphase), alpha-tert.-Butyl-4-chlor-4'-methylbenzhydrol, Cylcohexyldiphenylmethanol, alpha-(p-Tolyl)-benzhydrol, 1,1,2-Triphenylethanol, alpha,alpha-Diphenyl-2-pyridinethanol, alpha,al-pha-4-Pyridylbenzohydrol-N-oxid, 2-Fluortriphenylmethanol, Triphenylpropargylalko-hol, 4-[(Diphenyl)hydroxymethyl]benzonitril, 1-(2,6-Dimethoxyphenyl)-2-methyl-1-phe-nyl-1-propanol, 1,1,2-Triphenylpropan-1-ol und p-Anisaldehydcarbinol.

Als bifunktionelle Initiatoren geeignete organische Hydroxyverbindungen mit zwei Hydroxylgruppen im Molekül sind insbesondere zweiwertige Alkohole oder Diole mit einer Gesamtkohlenstoffzahl von 2 bis 30, insbesondere von 3 bis 24, vor allem von 4 bis 20, und Bisphenole mit einer Gesamtkohlenstoffzahl von 6 bis 30, insbesondere von 8 bis 24, vor allem von 10 bis 20, zu nennen, zum Beispiel Ethylenglykol, 1,2- und 1,3-Propylenglykol, 1,4-Butylenglykol, 1,6-Hexylenglykol, 1,2-, 1,3- oder 1,4-Bis(1-hydroxy-1-methylethyl)benzol (o-, m- oder p-Dicumylalkohol), Bisphenol A, 9,10-Di-hydro-9,10-dimethyl-9,10-anthracendiol, 1,1-Diphenylbutan-1,4-diol, 2-Hydroxytri-phenylcarbinol und 9-[2-(Hydroxymethyl)phenyl]-9-fluorenol.

Als monofunktionelle Initiatoren geeignete organische Halogenverbindungen mit einem Halogenatom im Molekül sind vor allem Verbindungen der allgemeinen Formel R⁶-Hal zu nennen, in der Hal ein Halogenatom, ausgewählt aus Fluor, Jod und insbesondere Chlor und Brom, bedeutet und R⁶ C₁- bis C₂₀-Alkylreste, insbesondere, C₁- bis C₈-Alkylreste, C₅- bis C₈-Cycloalkylreste oder C₇- bis C₂₀-Arylalkylreste, insbesondere C₇- bis C₁₂-Arylalkylreste, bezeichnet. Weiterhin können die Reste R⁶ auch Mischungen aus den oben genannten Strukturen enthalten und/oder weitere funktionelle Gruppen als die bereits genannten, beispielsweise eine Ketofunktion, ein Nitroxid oder eine Carboxylgruppe, und/oder heterocyclische Strukturelemente aufweisen.

Typische Beispiele für derartige organische Monohalogenverbindungen sind Methylchlorid, Methylbromid, Ethylchlorid, Ethylbromid, 1-Chlorpropan, 1-Brompropan, 2-Chlorpropan, 2-Brompropan, 1-Chlorbutan, 1-Brombutan, sec.-Butylchlorid, sec.-Butyl-bromid, Isobutylchlorid, Isobutylbromid, tert.-Butylchlorid, tert.-Butylbromid, 1-Chlorpen-tan, 1-Brompentan, 1-Chlorhexan, 1-Bromhexan, 1-Chlorheptan, 1-Bromheptan, 1-Chloroctan, 1-Bromoctan, 1-Chlor-2-ethylhexan, 1-Brom-2-ethylhexan, Cyclohexylchlorid, Cyclohexylbromid, Benzylchlorid, Benzylbromid, 1-Phenyl-1-chlorethan, 1-Phenyl-1-bromethan, 1-Phenyl-2-chlorethan, 1-Phenyl-2-bromethan, 1-Phenyl-1-chlorpropan, 1-Phenyl-1-brompropan, 1-Phenyl-2-chlorpropan, 1-Phenyl-2-brompropan, 2-Phenyl-2-chlorpropan, 2-Phenyl-2-brompropan, 1-Phenyl-3-chlorpropan, 1-Phenyl-3-brompro-pan, 1-Phenyl-1-chlorbutan, 1-Phenyl-1-brombutan, 1-Phenyl-2-chlorbutan, 1-Phenyl-2-brombutan, 1-Phenyl-3-chlorbutan, 1-Phenyl-3-brombutan, 1-Phenyl-4-chlorbutan, 1-Phenyl-4-brombutan, 2-Phenyl-1-chlorbutan, 2-Phenyl-1-brombutan, 2-Phenyl-2-chlorbutan, 2-Phenyl-2-brombutan, 2-Phenyl-3-chlorbutan, 2-Phenyl-3-brombutan, 2-Phe-nyl-4-chlorbutan und 2-Phenyl-4-brombutan.

Als difunktionelle Initiatoren geeignete organische Halogenverbindungen mit zwei Halogenatomen im Molekül sind beispielsweise 1,3-Bis-(1-brom-1-methylethyl)benzol, 1,3-Bis-(2-chlor-2-propyl)benzol (1,3-Dicumylchlorid) und 1,4-Bis-(2-chlor-2-propyl)-benzol (1,4-Dicumylchlorid) zu nennen.

Besonders bevorzugt ist der Initiator ausgewählt unter organischen Hydroxyverbindungen, bei denen eine oder mehrere Hydroxylgruppen an jeweils ein sp³-hybridisiertes Kohlenstoffatom ("Alkohole") oder an einen aromatischen Ring ("Phenole") gebunden sind, organischen Halogenverbindungen, bei denen eine oder mehrere Halogenatome an jeweils ein sp³-hybridisiertes Kohlenstoffatom gebunden sind, Protonensäuren und Wasser. Hiervon wird insbesondere ein Initiator bevorzugt, der unter organischen Hydroxyverbindungen, bei denen eine oder mehrere Hydroxylgruppen an jeweils ein sp³-hybridisiertes Kohlenstoffatom gebunden sind, ausgewählt ist.

Besonders bevorzugt werden bei den organischen Halogenverbindungen als Initiatoren weiterhin solche, bei denen das eine oder die mehreren Halogenatome jeweils an ein sekundäres oder insbesondere an ein tertiäres sp³-hybridisiertes Kohlenstoffatom gebunden sind.

Bevorzugt werden vor allem Initiatoren, die an solch einem sp³-hydrisiertem Kohlenstoffatom neben der Hydroxylgruppe die Reste R¹⁰, R¹¹ und R¹² tragen, welche unabhängig voneinander Wasserstoff, C₁- bis C₂₀-Alkyl, C₅- bis C₈-Cycloalkyl, C₆- bis C₂₀-Aryl, C₇- bis C₂₀-Alkylaryl oder Phenyl, wobei ein aromatischer Kern noch ein oder mehrere, vorzugsweise ein oder zwei C₁- bis C₄-Alkyl-, C₁- bis C₄-Alkoxy-, C₁-bis C₄-Hydroxy-alkyl- oder C₁- bis C₄-Halogenalkylreste als Substituenten tragen kann, bezeichnen, wobei höchstens eine der Variablen R¹⁰, R¹¹ oder R¹² Wasserstoff bedeutet und mindestens eine der Variablen R¹⁰, R¹¹ oder R¹² Phenyl, welches noch ein oder mehrere, vorzugsweise ein oder zwei C₁- bis C₄-Alkyl-, C₁- bis C₄-Alkoxy-, C₁- bis C₄-Hydroxyalkyl- oder C₁- bis C₄-Halogenalkylreste als Substituenten tragen kann, bezeichnet.

Als Protonensäuren kommen beispielsweise Chlorwasserstoffsäure, Bromwasserstoffsäure, Fluorwasserstoffsäure, Schwefelsäure, Cyanwasserstoffsäure sowie Mischungen hieraus in Betracht. Als Protonensäuren können aber auch protonierte Ether eingesetzt werden.

Ganz besonders bevorzugt werden für die vorliegende Erfindung Initiatoren, welche unter Wasser, einer oder mehreren Protonensäuren, Methanol, Ethanol, 1-Phenylethanol, 1-(p-Methoxyphenyl)ethanol, n-Propanol, Isopropanol, 2-Phenyl-2-propanol (Cumol), n-Butanol, Isobutanol, sec.-Butanol, tert.-Butanol, 1-Phenyl-1-chlorethan, 2-Phenyl-2-chlorpropan (Cumylchlorid), tert.-Butylchlorid und 1,3- oder 1,4-Bis-(1-hydroxy-1-methylethyl)-benzol sowie Mischungen hieraus ausgewählt sind. Hiervon werden insbesondere Initiatoren bevorzugt, welche unter Wasser, einer oder mehreren Protonensäuren, Methanol, Ethanol, 1-Phenylethanol, 1-(p-Methoxyphenyl)-ethanol, n-Propanol, Isopropanol, 2-Phenyl-2-propanol (Cumol), n-Butanol, Isobutanol, sec.-Butanol, tert.-Butanol, 1-Phenyl-1-chlorethan und 1,3- oder 1,4-Bis-(1-hydroxy-1-methyl-ethyl)-benzol sowie Mischungen hieraus ausgewählt sind.

Das Molverhältnis der genannten Initiatoren zum eingesetzten Isobuten-Monomer bei Homopolymerisation von Isobuten bzw. zur Gesamtmenge der eingesetzten polymerisationsfähigen Monomere bei Copolymerisation von Isobuten beträgt, bezogen auf jede einzelne funktionelle Stelle des Initiators, gemäß Ausführungsform (A) in der Regel 0,0005 : 1 bis 0,1 : 1, insbesondere 0,001 : 1 bis 0,075 : 1, vor allem 0,0025 : 1 bis 0,05 : 1. Bei Verwendung von Wasser als alleinigem Initiator oder in Kombination mit organischen Hydroxyverbindungen und/oder organischen Halogenverbindungen als weiteren Initiatoren beträgt das Molverhältnis von Wasser zum eingesetzten Isobuten-Monomer bei Homopolymerisation von Isobuten bzw. zur Gesamtmenge der eingesetzten polymerisationsfähigen Monomere bei Copolymerisation von Isobuten insbesondere 0,0001 : 1 bis 0,1 : 1, vor allem 0,0002 : 1 bis 0,05 : 1.

Ein Teil der als organische Hydroxy- bzw. Halogenverbindungen zugegebenen Initiator-Moleküle wird bei Ausführungsform (A) in die Polymerketten eingebaut. Der Anteil (I_{eff}) an Polymerketten, die durch ein solches eingebautes organisches Initiator-Molekül gestartet werden, kann bis zu 100 % betragen, in der Regel liegt er bei 5 bis 90 %. Die übrigen Polymerketten entstehen entweder durch aus Feuchtigkeitsspuren stammendem Wasser als Initiator-Molekül oder durch Kettenübertragungsreaktionen.

In einer weiteren bevorzugten Ausführungsform der vorliegenden Erfindung führt man die Polymerisation in Gegenwart von 0,01 bis 10 mmol, insbesondere von 0,05 bis 5,0 mmol, vor allem von 0,1 bis 1,0 mmol, jeweils bezogen auf 1 Mol eingesetztes Isobuten-Monomer bei Homopolymerisation von Isobuten bzw. auf 1 Mol der Gesamtmenge der eingesetzten polymerisationsfähigen Monomere bei Copolymerisation von Isobuten, einer stickstoffhaltigen basischen Verbindung durch.

Als derartige stickstoffhaltige basische Verbindung kann ein aliphatisches, cycloaliphatisches oder aromatisches Amin der allgemeinen Formel R⁷-NR⁸R⁹ oder auch Ammoniak eingesetzt werden, in der die Variablen R⁷, R⁸ und R⁹ jeweils unabhängig voneinander für Wasserstoff, C₁- bis C₂₀-Alkylreste, insbesondere, C₁- bis C₈-Alkylreste, C₅- bis C₈-Cycloalkylreste, C₆- bis C₂₀-Arylreste, insbesondere C₆- bis C₁₂-Arylreste, oder C₇- bis C₂₀-Arylalkylreste, insbesondere C₇- bis C₁₂-Arylalkylreste, stehen. Steht keine dieser Variablen für Wasserstoff, liegt ein tertiäres Amin vor. Steht eine dieser Variablen für Wasserstoff, liegt ein sekundäres Amin vor. Stehen zwei dieser Variablen für Wasserstoff, liegt ein primäres Amin vor. Stehen alle dieser Variablen für Wasserstoff, liegt Ammoniak vor.

Typische Beispiele für solche Amine der allgemeinen Formel R⁷-NR⁸R⁹ sind Methylamin, Ethylamin, n-Propylamin, iso-Propylamin, n-Butylamin, tert.-Butylamin, sec.-Butylamin, iso-Butylamin, tert.-Amylamin, n-Hexylamin, n-Heptylamin, n-Octylamin, 2-Ethylhexylamin, Cyclopentylamin, Cyclohexylamin, Anilin, Dimethylamin, Diethylamin, Di-n-propylamin, Di-iso-propylamin, Di-n-butylamin, Di-tert.-butylamin, Di-sec.-butyl-amin, Di-iso-butylamin, Di-tert.-amylamin, Di-n-hexylamin, Di-n-heptylamin, Di-n-octyl-amin, Di-(2-ethylhexyl)amin, Dicyclopentylamin, Dicyclohexylamin, Diphenylamin, Trimethylamin, Triethylamin, Tri-n-propylamin, Tri-iso-propylamin, Tri-n-butylamin, Tri-tert.-butylamin, Tri-sec.-butyl-amin, Tri-iso-butylamin, Tri-tert.-amylamin, Tri-n-hexyl-amin, Tri-n-heptylamin, Tri-n-octyl-amin, Tri-(2-ethylhexyl)amin, Tricyclopentylamin, Tricyclohexylamin, Triphenylamin, Dimethylethylamin, Methyl-n-butylamin, N-Methyl-N-phenylamin, N,N-Dimethyl-N-phenylamin, N-Methyl-N,N-diphenylamin oder N-Methyl-N-ethyl-N-n-butylamin.

Weiterhin kann als derartige stickstoffhaltige basische Verbindung auch eine Verbindung mit mehreren, insbesondere mit zwei oder drei Stickstoffatomen und mit 2 bis 20 Kohlenstoffatomen eingesetzt werden, wobei diese Stickstoffatome jeweils unabhängig voneinander Wasserstoffatome oder aliphatische, cycloaliphatische oder aromatische Substituenten tragen. Beispiele für solche Polyamine sind 1,2-Ethylendiamin, 1,3-Pro-pylendiamin, 1,4-Butylendiamin, Diethylentriamin, N-Methyl-1,2-ethylendiamin, N,N-Dimethyl-1,2-ethylendiamin, N,N'-Dimethyl-1,2-ethylendiamin oder N,N-Dimethyl-1,3-propylendiamin.

Als derartige stickstoffhaltige basische Verbindung eignet sich hierbei jedoch insbesondere ein gesättigter, teilungesättigter oder ungesättigter stickstoffhaltiger Fünfring- oder Sechsring-Heterocyclus, der ein, zwei oder drei Ringstickstoffatome enthält und ein oder zwei weitere Ringheteroatome aus der Gruppe Sauerstoff und Schwefel und/oder Hydrocarbylreste, insbesondere C₁- bis C₄-Alkylreste und/oder Phenyl, und/oder funktionelle Gruppen oder Heteroatome als Substituenten, insbesondere Fluor, Chlor, Brom, Nitro und/oder Cyano, aufweisen kann, beispielweise Pyrrolidin, Pyrrol, Imidazol, 1,2,3- oder 1,2,4-Triazol, Oxazol, Thiazol, Piperidin, Pyrazan, Pyrazol, Pyridazin, Pyrimidin, Pyrazin, 1,2,3-, 1,2,4- oder 1,2,5-Triazin, 1,2,5-Oxathiazin, 2H-1,3,5-Thiadiazin oder Morpholin.

In ganz besonderem Maße eignet sich als derartige stickstoffhaltige basische Verbindung jedoch Pyridin oder ein Derivat des Pyridins (insbesondere ein mono-, di- oder tri-C₁- bis C₄-alkylsubstituertes Pyridin) wie 2-, 3-, oder 4-Methylpyridin (Picoline), 2,3-, 2,4-, 2,5-, 2,6-, 3,4-, 3,5- oder 3,6-Dimethylpyridin (Lutidine), 2,4,6-Trimethylpyridin (Collidin), 2-, 3,- oder 4-tert.-Butylpyridin, 2-tert.-Butyl-6-methylpyridin, 2,4-, 2,5-, 2,6- oder 3,5-Di-tert.-butylpyridin oder auch 2-, 3,- oder 4-Phenylpyridin.

Man kann eine einzelne stickstoffhaltige basische Verbindung oder Mischungen solcher stickstoffhaltiger basischer Verbindungen einsetzen.

Für den Einsatz von Isobuten oder eines Isobuten enthaltenden Monomerengemisches als zu polymerisierendem Monomer eignet sich als Isobuten-Quelle in Ausführungsform (A) sowohl Rein-Isobuten als auch Isobuten-haltige C₄-Kohlenwasserstoffströme, beispielsweise C₄-Raffinate, insbesondere "Raffinat 1", C₄-Schnitte aus der Isobutan-Dehydrierung, C₄-Schnitte aus Steamcrackern und aus FCC-Crackern (fluid catalysed cracking), sofern sie weitgehend von darin enthaltenem 1,3-Butadien befreit sind. Ein C₄-Kohlenwasserstoff-strom aus einer FCC-Raffinerieeinheit ist auch als "b/b"-Strom bekannt. Weitere geeignete Isobuten-haltige C₄-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C₄-Kohlenwasserstoff-ströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C₄-Kohlenwasserstoffströmen im Bereich von 30 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen C₄-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

Als copolymerisierbare Monomere kommen in Betracht: Vinylaromaten wie Styrol und α-Methylstyrol, C₁- bis C₄-Alkylstyrole wie 2-, 3- und 4-Methylstyrol und 4-tert.-Butyl-styrol, Halogenstyrole wie 2-, 3- oder 4-Chlorstyrol sowie Isoolefine mit 5 bis 10 Kohlenstoffatomen wie 2-Methylbuten-1, 2-Methylpenten-1, 2-Methylhexen-1, 2-Ethylpen-ten-1, 2-Ethylhexen-1 und 2-Propylhepten-1. Als Comonomere kommen weiterhin Olefine in Betracht, die eine Silylgruppe aufweisen, wie 1-Trimethoxysilylethen, 1-(Trime-thoxysilyl)propen, 1-(Trimethoxysilyl)-2-methylpropen-2, 1-[Tri(methoxyethoxy)silyl]-ethen, 1-[Tri(methoxyethoxy)silyl]propen, und 1-[Tri(meth-oxyethoxy)silyl]-2-methylpro-pen-2. Weiterhin kommen - abhängig von den Polymerisationsbedingungen - als Comonomere auch Isopren, 1-Buten und cis- und trans-2-Buten in Betracht.

Sollen mit dem erfindungsgemäßen Verfahren Copolymere hergestellt werden, so kann das Verfahren so ausgestaltet werden, dass bevorzugt statistische Polymere oder bevorzugt Blockcoplymere entstehen. Zur Herstellung von Blockcopolymeren kann man beispielsweise die verschiedenen Monomere nacheinander der Polymerisationsreaktion zuführen, wobei die Zugabe des zweiten Comonomers insbesondere erst dann erfolgt, wenn das erste Comonomer zumindest teilweise schon polymerisiert ist. Auf diese Weise sind sowohl Diblock-, Triblock- als auch höhere Blockcopolymere zugänglich, die je nach Reihenfolge der Monomerzugabe einen Block des einen oder anderen Comonomers als terminalen Block aufweisen. Blockcopolymere entstehen in einigen Fällen aber auch dann, wenn alle Comonomere zwar gleichzeitig der Polymerisationsreaktion zugeführt werden, eines davon aber signifikant schneller polymerisiert als das oder die anderen. Dies ist insbesondere dann der Fall, wenn Isobuten und eine vinylaromatische Verbindung, insbesondere Styrol, im erfindungsgemäßen Verfahren copolymerisiert werden. Dabei entstehen vorzugsweise Blockcopolymere mit einem terminalen Polystyrolblock. Dies ist darauf zurückzuführen, dass die vinylaromatische Verbindung, speziell Styrol, signifikant langsamer polymerisiert als Isobuten.

Die Polymerisation kann sowohl kontinuierlich als auch diskontinuierlich erfolgen. Kontinuierliche Verfahren können in Analogie zu bekannten Verfahren des Standes der Technik zur kontinuierlichen Polymerisation von Isobuten in Gegenwart von Bortrifluorid-basierten Katalysatoren in flüssiger Phase durchgeführt werden.

Das erfindungsgemäße Verfahren ist sowohl für eine Durchführung bei niedrigen Temperaturen, z.B. bei -90° C bis 0° C, als auch bei höheren Temperaturen, d.h. bei wenigstens 0° C, z.B. bei 0° C bis +30° C oder bei 0° C bis +50° C, geeignet. Die Polymerisation gemäß dem erfindungsgemäßen Verfahren wird vorzugsweise jedoch bei Ausführungsform (A) bei niedrigeren Temperaturen, in der Regel bei - 70° C bis -10° C, insbesondere bei -60° C bis -15° C durchgeführt.

Erfolgt die Polymerisation gemäß dem erfindungsgemäßen Verfahren bei oder oberhalb der Siedetemperatur des zu polymerisierenden Monomers oder Monomerengemisches, so wird sie vorzugsweise in Druckgefäßen, beispielsweise in Autoklaven oder in Druckreaktoren, durchgeführt.

Vorzugsweise wird die Polymerisation gemäß dem erfindungsgemäßen Verfahren in Gegenwart eines inerten Verdünnungsmittels durchgeführt. Das verwendete inerte Verdünnungsmittel sollte geeignet sein, die während der Polymerisationsreaktion in der Regel auftretende Erhöhung der Viskosität der Reaktionslösung soweit zu verringern, dass die Abführung der entstehenden Reaktionswärme gewährleistet werden kann. Als Verdünnungsmittel sind solche Lösungsmittel oder Lösungsmittelgemische geeignet, die gegenüber den eingesetzten Reagenzien inert sind. Geeignete Verdünnungsmittel sind beispielsweise aliphatische Kohlenwasserstoffe wie n-Butan, n-Pentan, n-Hexan, n-Heptan, n-Octan und Isooctan, cycloaliphatische Kohlenwasserstoffe wie Cyclopentan und Cyclohexan, aromatische Kohlenwasserstoffe wie Benzol, Toluol und die Xylole, und halogenierte Kohlenwasserstoffe, insbesondere halogenierte aliphatische Kohlenwasserstoffe wie Methylchlorid, Dichlormethan, Trichlormethan (Chloroform), 1,1-Dichlorethan, 1,2-Dichlorethan, Trichlorethan und 1-Chlorbutan sowie halogenierte aromatische Kohlenwasserstoffe und in den Alkylseitenketten halogenierte Alkylaromaten wie Chlorbenzol, Monofluormethylbenzol, Difluormethylbenzol und Trifluormethylbenzol, sowie Mischungen der vorgenannten Verdünnungsmittel. Als halogenierte Kohlenwasserstoffe für die vorstehend und nachfolgend genannten inerten Verdünnungsmittel werden chlorierte Kohlenwasserstoffe, insbesondere reine Chlorkohlenwasserstoffe, bevorzugt. Vorzugsweise werden Fluorkohlenwasserstoffe von den hier einsetzbaren inerten Verdünnungsmitteln ausgenommen, um Restgehalte an Fluor im Polymerisat weitgehend auszuschließen. Als Verdünnungsmittel oder als Bestandteile der genannten Lösungsmittelgemische dienen auch die inerten Anteile von Isobuten-haltigen C₄-Kohlenwasserstoffströmen.

Vorzugsweise führt man gemäß Ausführungsform (A) die erfindungsgemäße Polymerisation in einem halogenierten Kohlenwasserstoff, insbesondere in einem halogenierten aliphatischen Kohlenwasserstoff, oder in einer Mischung aus halogenierten Kohlenwasserstoffen, insbesondere aus halogenierten aliphatischen Kohlenwasserstoffen, oder in einem Gemisch aus mindestens einem halogenierten Kohlenwasserstoff, insbesondere einen halogenierten aliphatischen Kohlenwasserstoff, und mindestens einem aliphatischen, cycloaliphatischen oder aromatischen Kohlenwasserstoff als inertem Verdünnungsmittel durch, beispielsweise ein Gemisch aus Dichlormethan und n-Hexan, üblicherweise im Vol.-Verhältnis von 10:90 bis 90:10, insbesondere von 50:50 bis 85:15. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien wie Aktivkohle, Molekularsiebe oder Ionenaustauscher.

In einer weiteren bevorzugten Variante der Ausführungsform (A) führt man die erfindungsgemäße Polymerisation in halogenfreien aliphatischen oder insbesondere halogenfreien aromatischen Kohlenwasserstoffen, insbesondere Toluol, durch. Für diese Ausführungsform hat sich Wasser in Kombination mit den genannten organischen Hydroxyverbindungen und/oder den genannten organischen Halogenverbindungen oder insbesondere als alleiniger Initiator als besonders vorteilhaft erwiesen.

Vorzugsweise wird die Polymerisation gemäß dem erfindungsgemäßen Verfahren unter weitgehend aprotischen, insbesondere unter weitgehend wasserfreien Reaktionsbedingungen durchgeführt. Unter weitgehend aprotischen beziehungsweise weitgehend wasserfreien Reaktionsbedingungen versteht man, dass der Wassergehalt (bzw. der Gehalt an protischen Verunreinigungen) im Reaktionsgemisch weniger als 50 ppm und insbesondere weniger als 5 ppm beträgt. In der Regel wird man daher die Einsatzstoffe vor ihrer Verwendung durch physikalische und/oder durch chemische Maßnahmen trocknen. Insbesondere hat es sich bewährt, die als Lösungsmittel eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer Menge zu versetzen, die ausreicht, um die Wasserspuren aus dem Lösungsmittel weitgehend zu entfernen. Das so behandelte Lösungsmittel wird dann vorzugsweise direkt in das Reaktionsgefäß einkondensiert. In ähnlicher Weise kann man auch mit den zu polymerisierenden Monomeren, insbesondere mit Isobuten oder mit den Isobuten-haltigen Mischungen verfahren. Auch die Trocknung mit anderen üblichen Trockenmitteln wie Molekularsieben oder vorgetrockneten Oxiden wie Aluminiumoxid, Siliciumdioxid, Calciumoxid oder Bariumoxid, ist geeignet. Die halogenierten Lösungsmittel, für die eine Trocknung mit Metallen wie Natrium oder Kalium oder mit Metallalkylen nicht in Betracht kommt, werden mit dafür geeigneten Trocknungsmitteln, beispielsweise mit Calciumchlorid, Phosphorpentoxid oder Molekularsieb, von Wasser oder Wasserspuren befreit. In analoger Weise kann man auch diejenigen Einsatzstoffe trocknen, für die eine Behandlung mit Metallalkylen ebenfalls nicht in Betracht kommt, beispielsweise vinylaromatische Verbindungen. Auch wenn Wasser als Initiator verwendet oder mitverwendet wird, sollte vorzugsweise Restfeuchtigkeit aus Lösungsmitteln und Monomeren vor Umsetzung durch Trocknung weitestgehend oder vollständig entfernt werden, um den Initiator Wasser gezielt in einer spezifizierten Menge einsetzen zu können, wodurch man eine höhere Prozesskontrolle und Reproduzierbarkeit der Ergebnisse erhält.

Die Polymerisation des Isobutens bzw. des Isobuten-haltigen Einsatzmaterials erfolgt in aller Regel spontan beim Inkontaktbringen des Polymerisationskatalysators, also des Aluminiumtrihalogenid-Donor-Komplexes bzw. des Aluminiumalkylhalogenid-Donor-Komplexes, insbesondere des Aluminiumtrichlorid-Donor-Komplexes mit dem Isobuten bzw. dem Isobuten-haltigen Monomerengemisch bei der gewünschten Reaktionstemperatur. Hierbei kann man so vorgehen, dass man die Monomere gegebenenfalls im Verdünnungsmittel vorlegt, auf Reaktionstemperatur bringt und anschließend den Polymerisationskatalysator, also den Aluminiumtrihalogenid-Donor-Komplex bzw. den Aluminiumalkylhalogenid-Donor-Komplex, insbesondere den Aluminiumtrichlorid-Donor-Komplex mit oder ohne Donoren, zugibt. Man kann auch so vorgehen, dass man den Polymerisationskatalysator, also den Aluminiumtrihalogenid-Donor-Komplex bzw. den Aluminiumalkylhalogenid-Donor-Komplex, insbesondere den Aluminiumtrichlorid-Donor-Komplex mit oder ohne Donoren, gegebenenfalls im Verdünnungsmittel, vorlegt und anschließend die Monomere zugibt. Als Polymerisationsbeginn gilt dann derjenige Zeitpunkt, zu dem alle Reaktanden im Reaktionsgefäß enthalten sind.

Zur Herstellung von Isobuten-Copolymeren kann man so vorgehen, dass man die Monomere, gegebenenfalls im Verdünnungsmittel, vorlegt und anschließend den Polymerisationskatalysator, also den Aluminiumtrihalogenid-Donor-Komplex bzw. den Aluminiumalkylhalogenid-Donor-Komplex, insbesondere den Aluminiumtrichlorid-Donor-Komplex mit oder ohne Donoren, zugibt. Die Einstellung der Reaktionstemperatur kann vor oder nach der Zugabe des Polymerisationskatalysators, also des Aluminiumtrihalogenid-Donor-Komplexes bzw. des Aluminiumalkylhalogenid-Donor-Komplexes, insbesondere des Aluminiumtrichlorid-Donor-Komplexes mit oder ohne Donoren, erfolgen. Man kann auch so vorgehen, dass man zunächst nur eines der Monomere, gegebenenfalls im Verdünnungsmittel, vorlegt, anschließend den Polymerisationskatalysator, also den Aluminiumtrihalogenid-Donor-Komplex bzw. den Aluminiumalkylhalogenid-Donor-Komplex, insbesondere den Aluminiumtrichlorid-Donor-Komplex mit oder ohne Donoren, zugibt und erst nach einer gewissen Zeit, beispielsweise wenn wenigstens 60%, wenigstens 80% oder wenigstens 90% des Monomers umgesetzt sind, das oder die weiteren Monomere zugibt. Alternativ kann man den Polymerisationskatalysator, also den Aluminiumtrihalogenid-Donor-Komplex bzw. der Aluminiumalkylhalogenid-Donor-Komplex, insbesondere den Aluminiumtrichlorid-Donor-Komplex mit oder ohne Donoren, gegebenenfalls im Verdünnungsmittel, vorlegen, anschließend die Monomere gleichzeitig oder nacheinander zugeben und dann die gewünschte Reaktionstemperatur einstellen. Als Polymerisationsbeginn gilt dann derjenige Zeitpunkt, zu dem der Polymerisationskatalysator, also der Aluminiumtrihalogenid-Donor-Komplex bzw. der Aluminiumalkylhalogenid-Donor-Komplex, insbesondere der Aluminiumtrichlorid-Donor-Komplex mit oder ohne Donoren, und wenigstens eines der Monomere im Reaktionsgefäß enthalten sind.

Neben der hier beschriebenen diskontinuierlichen Vorgehensweise kann man die Polymerisation gemäß dem erfindungsgemäßen Verfahren auch als kontinuierliches Verfahren ausgestalten. Hierbei führt man die Einsatzstoffe, d.h. das oder die zu polymerisierenden Monomere, gegebenenfalls das Verdünnungsmittel sowie gegebenenfalls den Polymerisationskatalysator, also den Aluminiumtrihalogenid-Donor-Komplex bzw. den Aluminiumalkylhalogenid-Donor-Komplex, insbesondere den Aluminiumtrichlorid-Donor-Komplex mit oder ohne Donoren, der Polymerisationsreaktion kontinuierlich zu und entnimmt kontinuierlich Reaktionsprodukt, so dass sich im Reaktor mehr oder weniger stationäre Polymerisationsbedingungen einstellen. Das oder die zu polymerisierenden Monomere können als solche, verdünnt mit einem Verdünnungs- oder Lösungsmittel oder als monomerhaltiger Kohlenwasserstoffstrom zugeführt werden.

Der als Polymerisationskatalysator wirksame Aluminiumtrihalogenid-Donor-Komplex bzw. der Aluminiumalkylhalogenid-Donor-Komplex, insbesondere der Aluminiumtrichlorid-Donor-Komplex mit oder ohne Donoren, liegt im Polymerisationsmedium in der Regel gelöst, dispergiert oder suspendiert vor. Auch eine Trägerung des des Aluminiumtrihalogenid-Donor-Komplexes bzw. des Aluminiumalkylhalogenid-Donor-Komplexes, insbesondere des Aluminiumtrichlorid-Donor-Komplexes mit oder ohne Donoren auf üblichen Trägermaterialien ist möglich. Geeignete Reaktortypen für das Polymerisationsverfahren der vorliegenden Erfindung sind üblicherweise Rührkesselreaktoren, Schlaufenreaktoren und Rohrreaktoren, aber auch Wirbelbettreaktoren, Wirbelschichtreaktoren, Rührtankreaktoren mit und ohne Lösungsmittel, Flüssigbettreaktoren, kontinuierliche Festbettreaktoren und diskontinuierliche Festbettreaktoren (batch-Fahrweise)

Im erfindungsgemäßen Verfahren wird der als Polymerisationskatalysator wirksame Aluminiumtrihalogenid-Donor-Komplex bzw. der Aluminiumalkylhalogenid-Donor-Komplex, insbesondere der Aluminiumtrichlorid-Donor-Komplex mit oder ohne Donoren, in der Regel in solch einer Menge eingesetzt, dass das Molverhältnis von Element der 1. bis 8. Nebengruppe bzw. der 3. bis 5. Hauptgruppe des Periodensystems, vor allem von Aluminium im Aluminiumtrihalogenid-Donor-Komplex bzw. Aluminiumalkylhalogenid-Donor-Komplex, insbesondere Aluminiumtrichlorid-Donor-Komplex mit oder ohne Donoren, zu Isobuten bei Homopolymerisation von Isobuten bzw. zur Gesamtmenge der eingesetzten polymerisationsfähigen Monomere bei Copolymerisation von Isobuten im Bereich von 1:10 bis 1:5000, insbesondere 1:15 bis 1:1000, vor allem 1:20 bis 1:250, liegt.

Zum Reaktionsabbruch wird das Reaktionsgemisch vorzugsweise desaktiviert, beispielsweise durch Zugabe einer protischen Verbindung, insbesondere durch Zugabe von Wasser, Alkoholen, wie Methanol, Ethanol, n-Propanol und Isopropanol oder deren Gemische mit Wasser, oder durch Zugabe einer wässrigen Base, z.B. einer wässrigen Lösung eines Alkali- oder Erdalkalihydroxids wie Natriumhydroxid, Kaliumhydroxid, Magnesiumhydroxid oder Calciumhydroxid, eines Alkali- oder Erdalkalicarbonats wie Natrium-, Kalium-, Magnesium- oder Calciumcarbonat, oder eines Alkali- oder Erdalkalihydrogencarbonats wie Natrium-, Kalium-, Magnesium- oder Calciumhydrogencarbonat.

Im erfindungsgemäßen Verfahren werden für die Derivatisierung durch Einführung der niedermolekularen polaren Gruppen A die beschriebenen hochreaktiven Isobutenhomo- oder -copolymere mit einem Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 85 Mol-%, besonders bevorzugt von wenigstens 90 Mol-%, besonders bevorzugt von mehr als 91 Mol-% und insbesondere von wenigstens 95 Mol-%, z.B. von nahezu 100 Mol-%, eingesetzt. Insbesondere verwendet man auch hochreaktive Isobuten-Copolymere, die aus Isobuten und wenigstens einem vinylaromatische Monomer, insbesondere Styrol, aufgebaut sind, und einen Gehalt an terminalen Vinyliden-Doppelbindungen (α-Doppelbindungen) pro Polyisobuten-Kettenende von wenigstens 50 Mol-%, vorzugsweise von wenigstens 60 Mol-%, vorzugsweise von wenigstens 70 Mol-%, vorzugsweise von wenigstens 80 Mol-%, vorzugsweise von wenigstens 80 Mol-%, vorzugsweise von wenigstens 85 Mol-%, besonders bevorzugt von wenigstens 90 Mol-%, besonders bevorzugt von mehr als 91 Mol-% und insbesondere von wenigstens 95 Mol-%, z.B. von nahezu 100 Mol-%, aufweisen. Zur Herstellung solcher Copolymeren aus Isobuten und wenigstens einem vinylaromatischen Monomer, insbesondere Styrol, wird Isobuten oder ein Isobuten-haltiger Kohlenwasserstoffschnitt mit dem wenigstens einem vinylaromatischen Monomer in einem Gew.-Verhältnis Isobuten zu Vinylaromat von 5 bis 95 zu 95 bis 5, insbesondere von 30 bis 70 zu 70 bis 30, copolymerisiert.

Vorzugsweise weisen die erfindungsgemäß eingesetzten hochreaktiven Isobutenhomo- oder -copolymere und speziell die Isobutenhomopolymere eine Polydispersität (PDI = M_{w}/Mₙ) von 1,05 bis weniger als 3,5, vorzugsweise von 1,05 bis weniger als 3,0, vorzugsweise von 1,05 bis weniger als 2,5, vorzugsweise von 1,05 bis 2,3, besonders bevorzugt von 1,05 bis 2,0 und insbesondere von 1,1 bis 1,85 auf. Typische Werte für PDI liegen bei optimaler Verfahrensführung bei 1,2 bis 1,7.

Vorzugsweise besitzen die erfindungsgemäß eingesetzten hochreaktiven Isobutenhomo- oder -copolymere ein zahlenmittleres Molekulargewicht Mₙ (bestimmt durch Gelpermeationschromatographie) von vorzugsweise 500 bis 250.000, besonders bevorzugt von 500 bis 100.000, stärker bevorzugt von 500 bis 25.000 und insbesondere von 500 bis 5000. Isobutenhomopolymere besitzen noch stärker bevorzugt ein zahlenmittleres Molekulargewicht Mₙ von 500 bis 10.000 und insbesondere von 500 bis 5.000, z.B. von etwa 1000 oder von etwa 2300.

Insbesondere eignet sich das erfindungsgemäße Verfahren zur Herstellung von Isobutenhomo- oder -copolymer-Derivaten der allgemeinen Formel I, bei denen der POL zugrundeliegende hydrophobe n-funktionelle Rest durch Homopolymerisation von Isobuten oder Copolymerisation von Isobuten mit bis zu 20 Gew.-% n-Buten gebildet wurde, monofunktionell ist und ein zahlenmittleres Molekulargewicht (Mₙ) von 500 bis 5000, vor allem 650 bis 2500, aufweist.

Insbesondere eignet sich das erfindungsgemäße Verfahren weiterhin auch zur Herstellung von Isobutenhomo- oder -copolymer-Derivaten der allgemeinen Formel I, bei denen der POL zugrundeliegende hydrophobe n-funktionelle Rest durch Homopolymerisation von Isobuten oder Copolymerisation von Isobuten mit bis zu 20 Gew.-% n-Buten, jeweils unter Mitverwendung eines di- oder trifunktionellen Initiators (Inifers), gebildet wurde, di- oder trifunktionell ist und ein zahlenmittleres Molekulargewicht (Mₙ) von 500 bis 10.000, vor allem 1000 bis 5000, aufweist.

Insbesondere eignet sich das erfindungsgemäße Verfahren weiterhin auch zur Herstellung von Isobutencopolymer-Derivaten der allgemeinen Formel I, bei denen der POL zugrundeliegende hydrophobe n-funktionelle Rest durch Copolymerisation von Isobuten mit mindestens einem vinylaromatischen Comonomer, gegebenenfalls unter Mitverwendung eines di- oder trifunktionellen Initiators (Inifers), gebildet wurde, mono-, di- oder trifunktionell ist und ein zahlenmittleres Molekulargewicht (Mₙ) von 500 bis 15.000, vor allem 1000 bis 10.000, aufweist.

In einer bevorzugten Ausführungsform des erfindungsgemäßen Verfahrens zur Herstellung von Isobutenhomo- oder -copolymer-Derivaten der allgemeinen Formel I ist die niedermolekulare polare Gruppe A ein ausgewählt ist unter
(a) Mono- oder Polyaminogruppen mit bis zu 6 Stickstoffatomen, wobei mindestens ein Stickstoffatom basische Eigenschaften hat;
(h) Bernsteinsäureanhydrid oder aus Bernsteinsäureanhydrid abgeleiteten Gruppierungen mit Hydroxy- und/oder Amino- und/oder quaternisierten Amino- und/oder Amido- und/oder Imidogruppen, die durch thermische oder halogenkatalysierte Maleinierung der innenständigen Doppelbindung(en) und der terminalen Vinyli-den-Doppelbindung(en) der POL zugrundeliegenden Polyisobutenhomo- oder -copolymeren mit Maleinsäureanhydrid und im Falle von aus Bernsteinsäureanhydrid abgeleiteten Gruppierungen mit Hydroxy- und/oder Amino- und/oder quaternisierten Amino- und/oder Amido- und/oder Imidogruppen durch entsprechende Folgereaktionen hergestellt wurden, wobei ein resultierendes Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄- Alkylencarbonat und/oder mit Borsäure modifiziert werden kann;
(j) durch Mannich-Umsetzung von durch POL substituierten Phenolen mit Aldehyden und Mono- oder Polyaminen erzeugten Gruppierungen;
(k) Phenol-, Alkylphenol- oder (Hydroxyalkyl)-phenol-Gruppierungen.

Als Beispiele für die obigen niedermolekularen polaren Gruppen A seien die folgenden genannt:
Mono- oder Polyaminogruppen (a) enthaltende Isobutenhomo- oder -copolymer-Derivate der allgemeinen Formel I basieren in der Regel auf hochreaktivem Polyisobuten mit überwiegend endständigen Vinyliden-Doppelbindungen, insbesondere auf solchen mit einem zahlenmittlerem Molekulargewicht Mₙ von 300 bis 5000. Sie können auch Anteile an innenständigen Doppelbindungen enthalten. Polyisobutenamine auf Basis von hochreaktivem Polyisobuten, welches bis zu 20 Gew.-% n-Buten-Einheiten enthalten kann, sind beispielsweise gemäß der EP-A 244 616 durch Hydroformylierung und reduktive Aminierung mit Ammoniak, Monoaminen oder Polyaminen wie Dimethylaminopropylamin, Ethylendiamin, Diethylentriamin, Triethylentetramin oder Tetraethylenpentamin erhältlich. Geht man bei der Herstellung der Isobutenhomo- oder -copolymer-Derivate I von Polyisobuten mit einem Anteil an innenständigen Doppelbindungen (meist in der β- und γ-Position) aus, bietet sich auch der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder Polyamine, wie Dimethylaminopropylamin, Ethylendiamin, Diethylentriamin, Triethylentetramin oder Tetraethylenpentamin, eingesetzt werden.

Weitere bevorzugte Monoaminogruppen (a) enthaltende Isobutenhomo- oder - copolymer-Derivate I sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in WO-A-97/03946 beschrieben sind.

Weitere bevorzugte Monoaminogruppen (a) enthaltende Isobutenhomo- oder - copolymer-Derivate I sind die aus Polyisobutenepoxiden durch Umsetzung mit Aminen und nachfolgender Dehydratisierung und Reduktion der Aminoalkohole erhältlichen Verbindungen, wie sie insbesondere in DE-A-196 20 262 beschrieben sind.

Weitere bevorzugte Monoaminogruppen (a) enthaltende Isobutenhomo- oder - copolymer-Derivate I sind die aus der Umsetzung von hochreaktivem Polyisobuten mit einem oder mehreren aromatischen oder heteroaromatischen Aminen erhältlichen Verbindungen. Das hochreaktive Polyisobuten kann hierzu beispielsweise mit Anilin, N-Methylanilin, N,N-Dimethylanilin, o-, m- oder p-Toluidin oder o-, m- oder p-Aminopyridin zu der entsprechenden am aromatischen oder heteroaromatischen Kern polyisobutyl-substituierten Verbindung umgewandelt werden. Die eingesetzten aromatischen Amine können auch mehrfach, insbesondere zweifach, am Kern substituiert sein, insbesondere durch Alkylgruppen wie beispielsweise C₁- bis C₄-Alkylgruppen; typische Substitutionsmuster für solche Substituenten am aromatischen Kern sind die 2,3-, 2,4-, 2,5-, 2,6-, 3,4- oder die 3,5-Stellung. Hierbei entstehende typischen Verbindungen sind beispielsweise 4-Polyisobutylanilin, 4-Polyisobutyl-N-methylanilin, 4-Polyisobutyl-N,N-dimethylanilin, 4-Polyisobutyl-3-methylanilin oder 5-Polyisobutyl-2-aminopyridin. Die Synthese solcher am aromatischen oder heteroaromatischen Kern polyisobutyl-substituierter Verbindungen erfolgt dabei in der Regel nach den üblichen Methoden einer elektrophilen aromatischen Substitution (Friedel-Crafts-Alkylierung) am aromatischen bzw. heteroaromatischen Kern, beispielsweise unter Verwendung von Lewis-Säuren wie AlCl₃, ZnCl₂, oder BF₃ als Katalysatoren und bei erhöhten Temperaturen, insbesondere 25 bis 80° C oder 25 bis 250° C, erforderlichenfalls in einem inerten Lösungsmittel.

Bernsteinsäueanhydrid (h) enthaltende Isobutenhomo- oder -copolymer-Derivate I sind insbesondere Polyisobutenylbernsteinsäureanhydride, welche durch Umsetzung von hochreaktivem Polyisobuten mit Mₙ = 500 bis 5000 mit Maleinsäureanhydrid auf thermischem Weg oder über das chlorierte Polyisobuten erhältlich sind. Das eingesetzte Polyisobuten kann dabei mit 1 Äquivalent ("Monomaleinierung"), mit 2 Äquivalenten Maleinsäureanhydrid ("Bismaleinierung") oder mit 1 < n < 2 Äquivalenten Maleinsäureanhydrid, z. B. mit 1,05 bis 1,3 Äquivalenten Maleinsäureanhydrid, umgesetzt werden.

Aus Bernsteinsäureanhydrid abgeleitete Gruppierungen mit Hydroxy- und/oder Amino- und/oder quaternisierten Amino- und/oder Amido- und/oder Imidogruppen (h) enthaltende Isobutenhomo- oder -copolymer-Derivate I sind vorzugsweise entsprechende Derivate von polyisobutyl- oder polyisobutenylsubstituiertem Bernsteinsäureanhydrid und insbesondere die entsprechenden Derivate von Polyisobutenylbernsteinsäureanhydrid, welche durch Umsetzung von hochreaktivem Polyisobuten mit Mₙ = 300 bis 5000, welches noch Anteile an innenständigen Doppelbindungen enthalten kann, mit Maleinsäureanhydrid auf thermischem Weg oder über das chlorierte Polyisobuten erhältlich sind. Von besonderem Interesse sind hierbei Derivate mit Alkoholen wie Methanol, Ethanol, n-Propanol, Isopropanol, n-Butanol, Isobutanol, sec.-Butanol, tert.-Butanol oder Polyethern, die durch Oxalkylierung der genannten niedermolekularen Alkanole mit C₂- bis C₄-Alkylenoxiden hergestellt worden sind. Isobuten-haltige C₄-Kohlenwasserstoffströme und vor allem aliphatischen Polyaminen wie Ethylendiamin, Diethylentriamin, Triethylentetramin oder Tetraethylenpentamin. Bei den Gruppierungen mit Hydroxy-, gegebenenfalls quaternisierten Amino-, Amido- und/oder Imidogruppen handelt es sich beispielsweise um Carbonsäuregruppen, Säureamide von Monoaminen, Säureamide von Di- oder Poly-aminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Derartige Verbindungen sind als Kraftstoffadditive in US-A-4 849 572 beschrieben.

Unter aus Bernsteinsäureanhydrid abgeleitete Gruppierungen mit quaternisierten Aminogruppen enthaltenden Isobutenhomo- oder -copolymer-Derivaten I sind insbesondere quaternisierte Stickstoffverbindungen zu verstehen, die durch Addition einer Verbindung, die wenigstens eine mit einem Anhydrid reaktive Sauerstoff- oder Stickstoff-haltige Gruppe und zusätzlich wenigstens eine quaternisierbare Aminogruppe enthält, an Polyisobutenylbernsteinsäureanhydrid und nachfolgende Quaternisierung, insbesondere mit einem Epoxid, insbesondere in Abwesenheit von freier Säure, erhältlich sind, wie sie in der EP-Patentanmeldung Az. 10 168 622.8 beschrieben werden. Als Verbindungen mit wenigstens einer mit einem Anhydrid reaktiven Sauerstoff- oder Stickstoff-haltigen Gruppe und zusätzlich wenigstens einer quaternisierbaren Aminogruppe eignen sich insbesondere Polyamine mit mindestens einer primären oder sekundären Aminogruppe und mindestens einer tertiären Aminogruppe. Eine solche quaternisierte Stickstoffverbindung ist beispielsweise das bei 40° C erhaltene Umsetzungsprodukt von Polyisobutenylbernsteinsäureanhydrid, bei dem der Polyisobutenylrest typischerweise ein Mₙ von 1000 aufweist, mit 3-(Dimethylamino)propylamin, welches ein Polyisobutenylbernsteinsäurehalbamid darstellt und das anschließend mit Styroloxid in Abwesenheit von freier Säure bei 70° C quaternisiert wird.

In der Gruppe (h) resultierende Carbonsäureamid- und Carbonsäureimid-Derivate können, insbesondere beim Einsatz im Schmierstoff-Formulierungen, zur Verbesserung des Quellverhaltens von Elastomeren, welche beispielsweise in Dichtungen von Motoren, Aggregaten oder Vorrichtungen, die mit den genannten Derivaten oder mit diese enthaltenden Schmierstoff-Formulierungen in Kontakt kommen, eingebaut sind, noch mit mindestens einem C₂- bis C₁₂-Dicarbonsäureanhydrid wie Maleinsäureanhydrid oder Phthalsäureanhydrid, mit mindestens einem C₂- bis C₄-Alkylencarbonat wie Ethylencarbonat oder Propylencarbonat und/oder mit Borsäure modifiziert werden.

Durch Mannich-Umsetzung von substituierten Phenolen mit Aldehyden und Mono- oder Polyaminen erzeugte Gruppierungen (j) enthaltende Isobutenhomo- oder -co-polymer-Derivate I sind vorzugsweise Umsetzungsprodukte von Polyisobutylsubsti-tuierten Phenolen mit Aldehyden wie Formaldehyd, welcher beispielsweise auch in oligomerer oder polymerer Form, z. B. als Paraformaldehyd, eingesetzt werde kann, und mit Monoaminen, z. B. Dimethylamin, Diethylamin, Propylamin, Butylamin oder Morpholin, oder mit Polyaminen, z. B. Ethylendiamin, Diethylentriamin, Triethylentetramin, Tetraethylenpentamin oder Dimethylaminopropylamin. Die Polyisobutyl-substituierten Phenole können neben den endständigen Vinyliden-Doppelbindungen auch Anteile an innenständigen Doppelbindungen enthalten.

Derartige "Polyisobuten-Mannichbasen" auf Basis von hochreaktivem Polyisobuten mit Mₙ = 300 bis 5000 sind in der EP-A-831 141 beschrieben.

Phenol-, Alkylphenol- oder (Hydroxyalkyl)-phenol-Gruppierungen (k) enthaltende Isobutenhomo- oder -copolymer-Derivate I sind insbesondere die Vorstufen zu den Poly-isobuten-Mannichbasen in der Gruppe (j), welche durch Umsetzung von hochreaktivem Polyisobuten mit einem oder mehreren entsprechenden Phenolen, gegebenenfalls mit nachfolgender Umsetzung mit einem Aldehyd, gebildet werden. Das hochreaktive Polyisobuten kann hierzu beispielsweise mit unsubstituiertem Phenol, o-, m- oder p-Kresol, Xylenol, Hydrochinon, Brenzkatechin oder Resorcin umgesetzt werden. So gebildetes Polyisobutyl-substituiertes Phenol kann beispielsweise weiter mit einem Aldehyd wie Formaldehyd oder Paraformaldehyd zu einem Polyisobutyl-substituiertem Hydroxyalkylphenol, insbesondere einem Polyisobutylsubstituiertem Hydroxymethylphenol, z. B. zu 1-Hydroxymethyl-4-polyisobutylphenol, umgewandelt werden.

In einer bevorzugten Ausführungsform wird das erfindungsgemäße Verfahren zur Herstellung von Isobutenhomo- oder -copolymer-Derivaten der allgemeinen Formel I, in der A eine niedermolekulare polare Gruppe, welche eine Aminofunktion enthält, bedeutet, so durchgeführt, dass man Isobuten oder ein Isobuten enthaltendes Monomerengemisch in Gegenwart

(A) eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,

polymerisiert, das resultierende hochreaktive Isobutenhomo- oder -copolymer mit einem geeignetem Katalysator in Gegenwart von Kohlenmonoxid und Wasserstoff hydroformyliert und anschließend in Gegenwart von mindestens n Äquivalenten Ammoniak oder eines Mono- oder Polyamins reduktiv aminiert.

Die Hydroformylierung und die reduktive Aminierung von hochreaktiven Polyisobutenen sind beispielsweise in der EP-A 244 616 beschrieben. Dabei wird die Hydroformylierung in Gegenwart von Kohlenmonoxid und Wasserstoff üblicherweise mittels eines geeigneten Hydroformylierungskatalysators wie einem Rhodium- oder Kobaltkatalysator bei Temperaturen von 80 bis 200° C und CO/H₂-Drücken von bis zu 600 bar durchgeführt. Die sich anschließende reduktive Aminierung des erhaltenen Oxoproduktes (Hydroxymethylpolyisobuten oder Produktgemisch aus Hydroxymethylpolyisobuten und Polyisobuten-Aldehyd gleicher Kohlenstoffzahl) erfolgt in der Regel bei Temperaturen von 80 is 200° C und Wasserstoffdrücken von bis zu 600 bar, insbesondere 80 bis 300 bar.

In einer weiteren bevorzugten Ausführungsform wird das erfindungsgemäße Verfahren zur Herstellung von Isobutenhomo- oder -copolymer-Derivaten der allgemeinen Formel I, in der A eine niedermolekulare polare Gruppe, welche eine Aminofunktion enthält, bedeutet, so durchgeführt, dass man Isobuten oder ein Isobuten enthaltendes Monomerengemisch in Gegenwart

(A) eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -copolymer mit einem geeignetem Aktivierungsmittel, insbesondere mit Chlor, behandelt und anschließend mit n Äquivalenten Ammoniak oder eines Mono- oder Polyamins umsetzt.

In einer weiteren bevorzugten Ausführungsform wird das erfindungsgemäße Verfahren zur Herstellung von Isobutenhomo- oder -copolymer-Derivaten der allgemeinen Formel I, in der A eine niedermolekulare polare Gruppe, welche eine Carbonsäurederivatfunktion, insbesondere eine Carbonsäureimidfunktion, enthält, bedeutet, so durchgeführt, dass man Isobuten oder ein Isobuten enthaltendes Monomerengemisch in Gegenwart

(A) eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -copolymer mit einer ethylenisch ungesättigten C₄- bis C₁₂-Dicarbonsäure oder einem reaktivem Derivat hiervon, insbesondere mit Maleinsäureanhydrid, thermisch oder halogenkatalysiert umsetzt und gegebenenfalls anschließend mit einem Mono- oder Polyamin in das entspechende Carbonsäureamid- oder Carbonsäureimid-Derivat umwandelt, wobei das resultierende Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄-Alkylencarbonat und/oder mit Borsäure modifiziert werden kann.

In einer weiteren bevorzugten Ausführungsform wird das erfindungsgemäße Verfahren zur Herstellung von Isobutenhomo- oder -copolymer-Derivaten der allgemeinen Formel I, in der A eine niedermolekulare polare Gruppe, welche eine Aminofunktion enthält, bedeutet, so durchgeführt, dass man Isobuten oder ein Isobuten enthaltendes Monomerengemisch in Gegenwart

(A) eines als Polymerisationskatalysator wirksamen Aluminiumtrihalogenid-Donor-Komplexes oder eines Aluminumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -co-polymer mit einem Phenol in das entsprechende Alkylphenol umwandelt und dieses anschließend durch Umsetzung mit einem Aldehyd und einem primären oder sekundären Amin in das entsprechende Mannich-Addukt überführt.

Die erfindungsgemäß hergestellten Isobutenhomo- und -copolymer-Derivate eignen sich beispielsweise als Kraft- und Schmierstoffadditive.

Die erfindungsgemäß hergestellten Isobutenhomo- oder -copolymer-Derivate werden aus Isobutenpolymeren mit einem hohen Gehalt an terminalen Vinyliden-Doppelbin-dungen, welcher meist deutlich höher als 90 Mol-% ist, hergestellt und lassen sich somit in hohen Ausbeuten erzeugen. Weiterhin sind Aussehen und die Konsistenz dieser Derivate, beispielsweise deren Farbe, verbessert. Weiterhin sind auch die physikalischen Eigenschaften dieser Derivate, insbesondere das Viskositätsverhalten bei tiefen Temperaturen, sowie die Löslichkeiten, insbesondere in polaren Medien, die Temperaturstabiliät und die Lagerstabilität der Derivate verbessert. Das verwendete Katalysatorsystem für die Erzeugung der Isobutenpolymeren in der Vorstufe ist ausreichend aktiv, langlebig, unproblematisch in der Handhabung und störungsunanfällig, insbesondere ist es frei von Fluor, somit wird unerwünschte aufgrund von Restfluorgehalt bedingte Korrosion auf metallischen Materialien und Stahlsorten vermieden.

## Patentansprüche

1. Verfahren zur Herstellung von Isobutenhomo- oder -copolymer-Derivaten der allgemeinen Formel I
POL(-A)ₙ (I)
in der
POL den n-funktionellen Rest eines hydrophoben Polyisobutenhomo- oder -copolymeren mit einem zahlengemittelten Molekulargewicht (Mₙ) von 110 bis 250.000 bezeichnet, welcher Struktureinheiten aus mono-, di- oder trifunktionellen Initiatoren eingebaut enthalten kann,
A eine niedermolekulare polare Gruppe, welche jeweils eine oder mehrere Aminofunktionen und/oder Hydroxylgruppen und/oder Carbonsäure- oder -Carbonsäurederivatfunktionen, insbesondere Bernsteinsäureanhydrid- oder Bernsteinsäurederivatfunktionen enthält, bedeutet und
die Variable n für die Zahl 1, 2 oder 3 steht, wobei bei n = 2 und n = 3 die Variablen A gleich oder verschieden sein können,
wobei die niedermolekulare polare Gruppe A ausgewählt ist aus der Gruppe bestehend aus
(a) Mono- oder Polyaminogruppen mit bis zu 6 Stickstoffatomen, wobei mindestens ein Stickstoffatom basische Eigenschaften hat;
(h) Bernsteinsäureanhydrid oder aus Bernsteinsäureanhydrid abgeleiteten Gruppierungen mit Hydroxy- und/oder Amino- und/oder quaternisierten Amino- und/oder Amido- und/oder Imidogruppen, die durch thermische oder halogenkatalysierte Maleinierung der innenständigen Doppelbindung(en) und der terminalen Vinyliden-Doppelbindung(en) der POL zugrundeliegenden Polyisobutenhomo- oder -copolymeren mit Maleinsäureanhydrid und im Falle von aus Bernsteinsäureanhydrid abgeleiteten Gruppierungen mit Hydroxy- und/oder Amino- und/oder quaternisierten Amino- und/oder Amido- und/oder Imidogruppen durch entsprechende Folgereaktionen hergestellt wurden, wobei ein resultierendes Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄-Alkylencarbonat und/oder mit Borsäure modifiziert werden kann;
(j) durch Mannich-Umsetzung von durch POL substituierten Phenolen mit Aldehyden und Mono- oder Polyaminen erzeugten Gruppierungen;
(k) Phenol-, Alkylphenol- oder (Hydroxyalkyl)-phenol-Gruppierungen;
**dadurch gekennzeichnet, dass** man Isobuten oder ein Isobuten enthaltendes Monomerengemisch in Gegenwart
(A) eines als Polymerisationskatalysator wirksamen Aluminiumtrihalogenid-Donor-Komplexes oder eines Aluminiumalkylhalogenid-Donor-Komplexes, welcher als Donor eine organische Verbindung mit mindestens einer Ether-Funktion oder einer Carbonsäureester-Funktion enthält,
polymerisiert, das resultierende hochreaktive Isobutenhomo- oder -copolymer, welches einen Gehalt von wenigstens 50 Mol-% an terminalen Vinyliden-Doppelbindungen pro Poly-isobuten-Kettenende aufweist, mit mindestens n Äquivalenten einer die niedermolekulare polare Gruppe A oder eine Teilstruktur der niedermolekularen polaren Gruppe A einführenden Verbindung umsetzt und im Falle der Umsetzung mit einer Teilstruktur die Bildung der niedermolekularen polaren Gruppe A durch Folgereaktionen vervollständigt.

2. Verfahren nach Anspruch 1, **dadurch gekennzeichnet, dass** man gemäß Ausführungsform (A) als Polymerisationskatalysator einen Aluminiumtrihalogenid-Donor-Komplex oder einen Aluminiumalkylhalogenid-Donor-Komplex einsetzt, welcher als Donor einen Dihydrocarbylether der allgemeinen Formel R¹-O-R² enthält, in der die Variablen R¹ und R² unabhängig voneinander C₁- bis C₂₀-Alkylreste, C₅- bis C₈-Cycloalkylreste, C₆- bis C₂₀-Arylreste oder C₇-bis C₂₀-Arylalkylreste bezeichnen.

3. Verfahren nach Anspruch 1, **dadurch gekennzeichnet, dass** man gemäß Ausführungsform (A) als Polymerisationskatalysator einen Aluminiumtrihalogenid-Donor-Komplex oder einen Aluminiumalkylhalogenid-Donor-Komplex einsetzt, welcher als Donor einen Carbonsäurehydrocarbylester der allgemeinen Formel R³-COOR⁴ enthält, in der die Variablen R³ und R⁴ unabhängig voneinander C₁- bis C₂₀-Alkylreste, C₅- bis C₈-Cycloalkylreste, C₆- bis C₂₀-Arylreste oder C₇- bis C₂₀-Arylalkylreste bezeichnen.

4. Verfahren nach einem der vorstehenden Ansprüche, **dadurch gekennzeichnet, dass** man gemäß Ausführungsform (A) als Polymerisationskatalysator einen Aluminiumtrihalogenid-Donor-Komplex oder einen Aluminiumalkylhalogenid-Donor-Komplex einsetzt, bei dem die Donor-Verbindung eine Gesamt-Kohlenstoffzahl von 3 bis 16 aufweist.

5. Verfahren nach einem der vorstehenden Ansprüche, **dadurch gekennzeichnet, dass** man gemäß Ausführungsform (A) die Polymerisation unter Mitverwendung eines Initiators durchführt, welcher ausgewählt ist unter organischen Hydroxyverbindungen, bei denen eine oder mehrere Hydroxylgruppen an jeweils ein sp³-hybridisiertes Kohlenstoffatom oder an einen aromatischen Ring gebunden sind, organischen Halogenverbindungen, bei denen eine oder mehrere Halogenatome an jeweils ein sp³-hybridisiertes Kohlenstoffatom gebunden sind, Protonensäuren und Wasser.

6. Verfahren nach Anspruch 5, **dadurch gekennzeichnet, dass** der Initiator ausgewählt ist unter Wasser, einer oder mehreren Protonensäuren, Methanol, Ethanol, 1-Phenylethanol, 1-(p-Methoxyphenyl)ethanol, n-Propanol, Isopropanol, 2-Phenyl-2-propanol, n- Butanol, Isobutanol, sec.-Butanol, tert.-Butanol, 1-Phenyl-1-chlorethan, 2-Phenyl-2-chlorpropan, tert.-Butylchlorid und 1,3- oder 1,4-Bis(1-hydroxy-1-methylethyl)benzol sowie Mischungen hieraus.

7. Verfahren nach den Ansprüchen 1 bis 6, **dadurch gekennzeichnet, dass** man gemäß Ausführungsform (A) die Polymerisation in Gegenwart von 0,01 bis 10 mmol, jeweils bezogen auf 1 Mol eingesetztes Isobuten-Monomer bei Homopolymerisation von Isobuten bzw. auf 1 Mol der Gesamtmenge der eingesetzten polymerisationsfähigen Monomere bei Copolymerisation von Isobuten, einer stickstoffhaltigen basischen Verbindung durchführt.

8. Verfahren nach Anspruch 7, **dadurch gekennzeichnet, dass** man als stickstoffhaltige basische Verbindung Pyridin oder ein Derivat des Pyridins einsetzt.

9. Verfahren nach den Ansprüchen 1 bis 8, **dadurch gekennzeichnet, dass** man gemäß Ausführungsform (A) die Polymerisation in einem halogenierten aliphatischen Kohlenwasserstoff oder in einer Mischung aus halogenierten aliphatischen Kohlenwasserstoffen oder in einem Gemisch aus mindestens einem halogenierten aliphatischen Kohlenwasserstoff und mindestens einem aliphatischen, cycloaliphatischen oder aromatischen Kohlenwasserstoff oder in einem halogenfreien aliphatischen oder halogenfreien aromatischen Kohlenwasserstoff als inertem Verdünnungsmittel durchführt.

10. Verfahren nach den Ansprüchen 1 bis 9, **dadurch gekennzeichnet, dass** man als Monomerquelle für die Polymerisation einen technischen C₄-Kohlenwasserstoffstrom mit einem Isobuten-Gehalt von 1 bis 100 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit, einsetzt.

11. Verfahren nach den Ansprüchen 1 bis 10 zur Herstellung von Isobutenhomo- oder -copolymer-Derivaten der allgemeinen Formel I, bei denen der POL zugrundeliegende hydrophobe n-funktionelle Rest durch Homopolymerisation von Isobuten oder Copolymerisation von Isobuten mit bis zu 20 Gew.-% n-Buten gebildet wurde, monofunktionell ist und ein zahlenmittleres Molekulargewicht (Mₙ) von 500 bis 5000 aufweist.

12. Verfahren nach den Ansprüchen 1 bis 11 zur Herstellung von Isobutenhomo- oder -copolymer-Derivaten der allgemeinen Formel I, bei denen der POL zugrundeliegende hydrophobe n-funktionelle Rest durch Homopolymerisation von Isobuten oder Copolymerisation von Isobuten mit bis zu 20 Gew.-% n-Buten, jeweils unter Mitverwendung eines di- oder trifunktionellen Initiators (Inifers), gebildet wurde, di- oder trifunktionell ist und ein zahlenmittleres Molekulargewicht (Mₙ) von 500 bis 10.000 aufweist.

13. Verfahren nach den Ansprüchen 1 bis 12 zur Herstellung von Isobutencopolymer-Derivaten der allgemeinen Formel I, bei denen der POL zugrundeliegende hydrophobe n-funktionelle Rest durch Copolymerisation von Isobuten mit mindestens einem vinylaromatischen Comonomer, gegebenenfalls unter Mitverwendung eines di- oder trifunktionellen Initiators (Inifers), gebildet wurde, mono-, di- oder trifunktionell ist und ein zahlenmittleres Molekulargewicht (Mₙ) von 500 bis 15.000 aufweist.

14. Verfahren zur Herstellung von Isobutenhomo- oder -copolymer-Derivaten der allgemeinen Formel I, in der A eine niedermolekulare polare Gruppe, welche eine Aminofunktion enthält, bedeutet, nach den Ansprüchen 1 bis 13, **dadurch gekennzeichnet, dass** man Isobuten oder ein Isobuten enthaltendes Monomerengemisch in Gegenwart
(A) eines als Polymerisationskatalysator wirksamen Aluminiumtrihalogenid-Donor-Komplexes oder eines Aluminiumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -copolymer mit einem geeignetem Katalysator in Gegenwart von Kohlenmonoxid und Wasserstoff hydroformyliert und anschließend in Gegenwart von mindestens n Äquivalenten Ammoniak oder eines Mono- oder Polyamins reduktiv aminiert.

15. Verfahren zur Herstellung von Isobutenhomo- oder -copolymer-Derivaten der allgemeinen Formel I, in der A eine niedermolekulare polare Gruppe, welche eine Carbonsäurederivatfunktion, insbesondere eine Carbonsäureimidfunktion, enthält, bedeutet, nach den Ansprüchen 1 bis 13, **dadurch gekennzeichnet, dass** man Isobuten oder ein Isobuten enthaltendes Monomerengemisch in Gegenwart
(A) eines als Polymerisationskatalysator wirksamen Aluminiumtrihalogenid-Donor-Komplexes oder eines Aluminiumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -copolymer mit einer ethylenisch ungesättigten C₄- bis C₁₂-Dicarbonsäure oder einem reaktivem Derivat hiervon, insbesondere mit Maleinsäureanhydrid, thermisch oder halogenkatalysiert umsetzt und gegebenenfalls anschließend mit einem Mono- oder Polyamin in das entspechende Carbonsäureamid- oder Carbonsäureimid-Derivat umwandelt, wobei das resultierende Carbonsäureamid- oder Carbonsäureimid-Derivat noch durch weitere Umsetzung mit mindestens einem C₂- bis C₁₂-Dicarbonsäureanhydrid, mit mindestens einem C₂- bis C₄-Alkylencarbonat und/oder mit Borsäure modifiziert werden kann.

16. Verfahren zur Herstellung von Isobutenhomo- oder -copolymer-Derivaten der allgemeinen Formel I, in der A eine niedermolekulare polare Gruppe, welche eine Aminofunktion enthält, bedeutet, nach den Ansprüchen 1 bis 13, **dadurch gekennzeichnet, dass** man Isobuten oder ein Isobuten enthaltendes Monomerengemisch in Gegenwart
(A) eines als Polymerisationskatalysator wirksamen Aluminiumtrihalogenid-Donor-Komplexes oder eines Aluminiumalkylhalogenid-Donor-Komplexes, welcher als Donor eine organische Verbindung mit mindestens einer Ether-Funktion oder einer Carbonsäureester-Funktion enthält, insbesondere unter Mitverwendung eines Initiators,
polymerisiert, das resultierende hochreaktive Isobutenhomo- oder -copolymer mit einem Phenol in das entsprechende Alkylphenol umwandelt und dieses anschließend durch Umsetzung mit einem Aldehyd und einem primären oder sekundären Amin in das entsprechende Mannich-Addukt überführt.

## Claims

1. Process for preparing isobutene homo- or copolymer derivatives of the general formula I
POL(-A)ₙ (I)
in which
POL denotes the n-functional radical of a hydrophobic polyisobutene homo- or copolymer having a number-average molecular weight (Mₙ) of 110 to 250,000, which may contain structural units derived from mono-, di- or trifunctional initiators incorporated therein,
A denotes a low-molecular-weight polar group which contains in each case one or more amino functions and/or hydroxyl groups and/or carboxylic acid or carboxylic acid derivative functions, in particular succinic anhydride or succinic acid derivative functions, and
the variable n stands for the number 1, 2 or 3, where for n = 2 and n = 3 the variables A may be identical or different,
wherein the low-molecular-weight polar group A is selected from the group consisting of
(a) mono- or polyamino groups having up to 6 nitrogen atoms, wherein at least one nitrogen atom has basic properties;
(h) succinic anhydride or groupings derived from succinic anhydride having hydroxy and/or amino and/or quaternized amino and/or amide and/or imido groups, which were prepared by thermal or halogen-catalyzed maleination of the internal double bond(s) and the terminal vinylidene double bond(s) of the polyisobutene homo- or copolymers underlying POL with maleic anhydride and, in the case of groupings derived from succinic anhydride having hydroxy and/or amino and/or quaternized amino and/or amide and/or imido groups, by corresponding subsequent reactions, wherein a resulting carboxylic acid amide or carboxylic acid imide derivative may be further modified by reaction with at least one C₂ to C₁₂ dicarboxylic anhydride, with at least one C₂ to C₄ alkylene carbonate and/or with boric acid;
(j) groupings produced by Mannich reaction of phenols substituted by POL with aldehydes and mono- or polyamines;
(k) phenol, alkylphenol or (hydroxyalkyl)phenol groupings;
**characterized in that** isobutene or a monomer mixture containing isobutene is polymerized in the presence of
(A) an aluminum trihalide donor complex effective as a polymerization catalyst or an aluminum alkyl halide donor complex which contains as donor an organic compound having at least one ether function or a carboxylic acid ester function,
the resulting highly reactive isobutene homo- or copolymer, which has a content of at least 50 mol-% of terminal vinylidene double bonds per polyisobutene chain end, is reacted with at least n equivalents of a compound introducing the low-molecular-weight polar group A or a partial structure of the low-molecular-weight polar group A, and in the case of reaction with a partial structure the formation of the low-molecular-weight polar group A is completed by subsequent reactions.

2. Process according to claim 1, **characterized in that** according to embodiment (A) an aluminum trihalide donor complex or an aluminum alkyl halide donor complex is used as the polymerization catalyst, which contains as donor a dihydrocarbylether of the general formula R¹-O-R², in which the variables R¹ and R² are independent of one another and denote C₄ to C₂₀ alkyl radicals, C₅ to C₈ cycloalkyl radicals, C₅ to C₂₀ aryl radicals, or C₇ to C₂₀ arylalkyl radicals.

3. Process according to Claim 1, **characterized in that**, according to embodiment
(A) an aluminum trihalide donor complex or an aluminum alkyl halide donor complex is used as the polymerization catalyst, which contains as donor a carboxylic acid hydrocarbyl ester of the general formula R³-COOR4, in which the variables R³ and R⁴ independently of one another denote C₁ to C₂₀ alkyl radicals, C₅ to C₈ cycloalkyl radicals, C₆ to C₂₀ aryl radicals, or C₇ to C₂₀ arylalkyl radicals.

4. Process according to one of the preceding claims, **characterized in that**, according to embodiment (A), an aluminum trihalide donor complex or an aluminum alkyl halide donor complex is used as the polymerization catalyst, in which the donor compound has a total carbon number of 3 to 16.

5. Process according to one of the preceding claims, **characterized in that**, according to embodiment (A), the polymerization is carried out with the co-use of an initiator which is selected from organic hydroxy compounds in which one or more hydroxyl groups are each bonded to an sp³-hybridized carbon atom or to an aromatic ring, organic halogen compounds in which one or more halogen atoms are each bonded to an sp³-hybridized carbon atom, protic acids, and water.

6. Process according to Claim 5, **characterized in that** the initiator is selected from water, one or more protic acids, methanol, ethanol, 1-phenylethanol, 1-(p-methoxyphenyl)ethanol, n-propanol, isopropanol, 2-phenyl-2-propanol, n-butanol, isobutanol, sec-butanol, tert-butanol, 1-phenyl-1-chloroethane, 2-phenyl-2-chloropropane, tert-butyl chloride, and 1,3- or 1,4-bis(1-hydroxy-1-methylethyl)benzene, as well as mixtures thereof.

7. Process according to Claims 1 to 6, **characterized in that**, according to embodiment (A), the polymerization is carried out in the presence of 0.01 to 10 mmol, in each case based on 1 mol of isobutene monomer used in the homopolymerization of isobutene or on 1 mol of the total amount of polymerizable monomers used in the copolymerization of isobutene, of a nitrogen-containing basic compound.

8. Process according to Claim 7, **characterized in that** pyridine or a derivative of pyridine is used as the nitrogen-containing basic compound.

9. Process according to Claims 1 to 8, **characterized in that**, according to embodiment form (A), the polymerization is carried out in a halogenated aliphatic hydrocarbon or in a mixture of halogenated aliphatic hydrocarbons or in a mixture of at least one halogenated aliphatic hydrocarbon and at least one aliphatic, cycloaliphatic, or aromatic hydrocarbon, or in a halogen-free aliphatic or halogen-free aromatic hydrocarbon as an inert diluent.

10. Process according to Claims 1 to 9, **characterized in that** a technical C4 hydrocarbon stream having an isobutene content of 1 to 100% by weight, in particular a raffinate 1 stream, a b/b-stream from an FCC refinery unit, a product stream from a propylene-isobutane co-oxidation, or a product stream from a metathesis unit, is used as the monomer source for the polymerization.

11. Process according to Claims 1 to 10 for the preparation of isobutene homo- or -copolymer derivatives of the general formula I, in which the hydro-phobic n-functional radical underlying POL was formed by homopolymerization of isobutene or copolymerization of isobutene with up to 20 wt.% n-butene, is monofunctional and has a number-average molecular weight (Mₙ) of 500 to 5000.

12. Process according to claims 1 to 11 for the preparation of isobutene homo- or -copolymer derivatives of the general formula I, in which the hydrophobic n-functional radical underlying POL was formed by homopolymerization of isobutene or copolymerization of isobutene with up to 20 wt.% n-butene, each with the concomitant use of a di- or trifunctional initiator (inifer), is di- or trifunctional and has a number-average molecular weight (Mₙ) of 500 to 10,000.

13. Process according to claims 1 to 12 for the preparation of isobutene copolymer derivatives of the general formula I, in which the hydrophobic n-functional radical underlying POL was formed by copolymerization of isobutene with at least one vinylaromatic comonomer, optionally with the concomitant use of a di- or trifunctional initiator (inifer), was formed, is mono-, di- or trifunctional and has a number-average molecular weight (Mₙ) of 500 to 15,000.

14. Process for the preparation of isobutene homo- or copolymer derivatives of the general formula I, in which A denotes a low-molecular-weight polar group containing an amino function,
according to claims 1 to 13, **characterized in that** isobutene or a monomer mixture containing isobutene is polymerized in the presence of
(A) an aluminum trihalide-donor complex effective as a polymerization catalyst or an aluminum alkyl halide-donor complex which contains as donor an organic compound having at least one ether function or a carboxylic acid ester function, in particular with the concomitant use of an initiator,
polymerized, the resulting highly reactive isobutene homo- or copolymer is hydroformylated with a suitable catalyst in the presence of carbon monoxide and hydrogen and subsequently reductively aminated in the presence of at least n equivalents of ammonia or a mono- or polyamine.

15. Process for the preparation of isobutene homo- or copolymer derivatives of the general formula I, in which A denotes a low-molecular-weight polar group containing a carboxylic acid derivative function, in particular a carboxylic acid imide function, according to claims 1 to 13, **characterized in that** isobutene or a monomer mixture containing isobutene is polymerized in the presence of
(A) an aluminum trihalide-donor complex effective as a polymerization catalyst or an aluminum alkyl halide-donor complex which contains as donor an organic compound having at least one ether function or a carboxylic acid ester function, in particular with the concomitant use of an initiator, polymerized, the resulting highly reactive isobutene homo- or copolymer is reacted with an ethylenically unsaturated C4 to C12 dicarboxylic acid or a reactive derivative thereof, in particular with maleic anhydride, thermally or halogen-catalyzed, and
optionally subsequently converted with a mono- or polyamine into the corresponding carboxylic acid amide or carboxylic acid imide derivative, wherein the resulting carboxylic acid amide or carboxylic acid imide derivative can be further modified by reaction with at least one C2 to C12 dicarboxylic acid anhydride, with at least one C2 to C4 alkylene carbonate and/or with boric acid.

16. Process for the preparation of isobutene homo- or copolymer derivatives of the general formula I, in which A denotes a low-molecular-weight polar group containing an amino function, according to claims 1 to 13, **characterized in that** isobutene or a monomer mixture containing isobutene is polymerized in the presence of
(A) an aluminum trihalide-donor complex effective as a polymerization catalyst or an aluminum alkyl halide donor complex, which contains as donor an organic compound with at least one ether function or a carboxylic acid ester function, in particular with the additional use of an initiator, polymerized, converts the resulting highly reactive isobutene homo- or copolymer with a phenol into the corresponding alkylphenol and subsequently by reaction with an aldehyde and a primary or secondary amine into the corresponding Mannich adduct.

## Revendications

1. Procédé de préparation de dérivés d'homopolymères ou de copolymères d'isobutène de formule générale I
POL(-A)n (I)
dans laquelle
POL désigne le reste n-fonctionnel d'un homopolymère ou copolymère de polyisobutène hydrophobe ayant une masse moléculaire moyenne en nombre (Mₙ) de 110 à 250 000, lequel peut contenir des unités structurales incorporées provenant d'initiateurs mono-, di- ou trifonctionnels,
A désigne un groupe polaire de faible masse moléculaire contenant chacun une ou plusieurs fonctions amino et/ou groupes hydroxyle et/ou fonctions acide carboxylique ou dérivés d'acide carboxylique, en particulier des fonctions anhydride succinique ou dérivés d'acide succinique, et
la variable n représente le nombre 1, 2 ou 3, les variables A pouvant être identiques ou différentes lorsque n = 2 et n = 3,
le groupe polaire de faible masse moléculaire A étant choisi dans le groupe constitué de
(a) groupes mono- ou polyamino comportant jusqu'à 6 atomes d'azote, dont au moins un atome d'azote possède des propriétés basiques ;
(h) anhydride succinique ou groupements dérivés de l'anhydride succinique comportant des groupes hydroxy et/ou amino et/ou amino quaternisé et/ou amide et/ou imido, obtenus par maléinisation thermique ou catalysée par halogène de la ou des double(s) liaison(s) interne(s) et de la ou des double(s) liaison(s) vinylidène terminale(s) des homopolymères ou copolymères de polyisobutène sous-jacents à POL avec l'anhydride maléique, et dans le cas de groupements dérivés de l'anhydride succinique comportant des groupes hydroxy et/ou amino et/ou amino quaternisé et/ou amide et/ou imido, par des réactions consécutives correspondantes, un dérivé amide d'acide carboxylique ou imide d'acide carboxylique résultant pouvant encore être modifié par réaction supplémentaire avec au moins un anhydride d'acide dicarboxylique en C₂ à C₁₂, avec au moins un carbonate d'alkylène en C₂ à C₄ et/ou avec de l'acide borique ;
(j) groupements générés par réaction de Mannich de phénols substitués par POL avec des aldéhydes et des mono- ou polyamines ;
(k) groupements phénol, alkylphénol ou (hydroxyalkyl)phénol ;
**caractérisé en ce que** l'on polymérise l'isobutène ou un mélange de monomères contenant de l'isobutène en présence
(A) d'un complexe donneur d'aluminium trihalogénure actif en tant que catalyseur de polymérisation ou d'un complexe donneur d'aluminium alkylhalogénure contenant comme donneur un composé organique comportant au moins une fonction éther ou une fonction ester d'acide carboxylique,
l'homopolymère ou copolymère d'isobutène hautement réactif résultant, qui présente une teneur d'au moins 50 % en moles de doubles liaisons vinylidène terminales par extrémité de chaîne polyisobutène, est mis en réaction avec au moins n équivalents d'un composé introduisant le groupe polaire de faible masse moléculaire A ou une sous-structure du groupe polaire de faible masse moléculaire A, et dans le cas d'une réaction avec une sous-structure, la formation du groupe polaire de faible masse moléculaire A est complétée par des réactions consécutives.

2. Procédé selon la revendication 1, **caractérisé en ce que**, selon le mode de réalisation,
(A) on utilise comme catalyseur de polymérisation un complexe donneur d'aluminium trihalogénure ou un complexe donneur d'aluminium alkylhalogénure contenant comme donneur un dihydrocar-éthers de la formule générale R¹-O-R², dans laquelle les variables R¹ et R² désignent indépendamment l'un de l'autre des restes alkyle en C₁ à C₂₀, des restes cycloalkyle en C₅ à C₈, des restes aryle en C₆ à C₂₀ ou des restes C₇ à C₂₀-arylalkyle.

3. Procédé selon la revendication 1, **caractérisé en ce que**, conformément au mode de réalisation (A) on utilise comme catalyseur de polymérisation un complexe donneur de trihalogénure d'aluminium ou un complexe donneur d'halogénure d'alkylaluminium, qui contient comme donneur un hydrocarbylester d'acide carboxylique de formule générale R³-COOR⁴, dans laquelle les variables R³ et R⁴ désignent indépendamment l'un de l'autre des restes alkyle en C₁ à C₂₀, des restes cycloalkyle en C₅ à C₈, des restes aryle en C₆ à C₂₀ ou des restes arylalkyle en C₇ à C₂₀.

4. Procédé selon l'une des revendications précédentes, **caractérisé en ce que**, conformément au mode de réalisation (A), on utilise comme catalyseur de polymérisation un complexe donneur de trihalogénure d'aluminium ou un complexe donneur d'halogénure d'alkylaluminium, dans lequel le composé donneur présente un nombre total de carbones de 3 à 16.

5. Procédé selon l'une des revendications précédentes, **caractérisé en ce que**, conformément au mode de réalisation (A), on effectue la polymérisation en utilisant conjointement un initiateur choisi parmi les composés hydroxy organiques dans lesquels un ou plusieurs groupes hydroxyle sont liés chacun à un atome de carbone hybridé sp³ ou à un cycle aromatique, les composés halogénés organiques dans lesquels un ou plusieurs atomes d'halogène sont liés chacun à un atome de carbone hybridé sp³, les acides protoniques et l'eau.

6. Procédé selon la revendication 5, **caractérisé en ce que** l'initiateur est choisi parmi l'eau, un ou plusieurs acides protoniques, le méthanol, l'éthanol, le 1-phényléthanol, le 1-(p-méthoxyphényl)éthanol, le n-propanol, l'isopropanol, le 2-phényl-2-propanol, le n-butanol, l'isobutanol, le sec.-butanol, le tert.-butanol, le 1-phényl-1-chloroéthane, le 2-phényl-2-chloropropane, le chlorure de tert.-butyle et le 1,3- ou 1,4-bis(1-hydroxy-1-méthyléthyl)benzène ainsi que leurs mélanges.

7. Procédé selon les revendications 1 à 6, **caractérisé en ce que**, conformément au mode de réalisation (A), on effectue la polymérisation en présence de 0,01 à 10 mmol, rapportés respectivement à 1 mole de monomère d'isobutène utilisé lors de l'homopolymérisation de l'isobutène ou à 1 mole de la quantité totale des monomères polymérisables utilisés lors de la copolymérisation de l'isobutène, d'un composé basique azoté.

8. Procédé selon la revendication 7, **caractérisé en ce que** l'on utilise comme composé basique azoté la pyridine ou un dérivé de la pyridine.

9. Procédé selon les revendications 1 à 8, **caractérisé en ce que**, conformément au mode de réalisation
(A), on effectue la polymérisation dans un hydrocarbure aliphatique halogéné ou dans un mélange d'hydrocarbures aliphatiques halogénés ou dans un mélange d'au moins un hydrocarbure aliphatique halogéné et d'au moins un hydrocarbure aliphatique, cycloaliphatique ou aromatique, ou dans un hydrocarbure aliphatique exempt d'halogène ou un hydrocarbure aromatique exempt d'halogène comme diluant inerte.

10. Procédé selon les revendications 1 à 9, **caractérisé en ce que** l'on utilise comme source de monomères pour la polymérisation un flux d'hydrocarbures en C₄ technique ayant une teneur en isobutène de 1 à 100 % en poids, notamment un flux de raffinat 1, un flux b/b provenant d'une unité de raffinage FCC, un flux de produits d'une co-oxydation propylène-isobutane ou un flux de produits d'une unité de métathèse.

11. Procédé selon les revendications 1 à 10 pour la préparation d'homo- ou de -copolymère-dérivés de la formule générale I, dans lesquels le reste n-fonctionnel hydrophobe sous-jacent au POL a été formé par homopolymérisation de l'isobutène ou copolymérisation de l'isobutène avec jusqu'à 20 % en poids de n-butène, est monofonctionnel et présente une masse moléculaire moyenne en nombre (Mₙ) de 500 à 5000.

12. Procédé selon les revendications 1 à 11 pour la préparation d'homopolymères ou -copolymère-dérivés de la formule générale I, dans lesquels le reste n-fonctionnel hydrophobe sous-jacent au POL a été formé par homopolymérisation de l'isobutène ou copolymérisation de l'isobutène avec jusqu'à 20 % en poids de n-butène, chacun avec utilisation conjointe d'un initiateur di- ou trifonctionnel (inifer), est di- ou trifonctionnel et présente une masse moléculaire moyenne en nombre (Mₙ) de 500 à 10 000.

13. Procédé selon les revendications 1 à 12 pour la préparation de dérivés de copolymères d'isobutène de la formule générale I, dans lesquels le reste n-fonctionnel hydrophobe sous-jacent au POL a été formé par copolymérisation de l'isobutène avec au moins un comonomère vinylaromatique, éventuellement avec utilisation conjointe d'un initiateur di- ou trifonctionnel (inifer),
a été formé, est mono-, di- ou trifonctionnel et présente une masse moléculaire moyenne en nombre (Mₙ) de 500 à 15 000.

14. Procédé pour la préparation de dérivés d'homopolymères ou de copolymères d'isobutène de la formule générale I, dans laquelle A représente un groupe polaire de faible masse moléculaire contenant une fonction amine,
signifie, selon les revendications 1 à 13, **caractérisé en ce que** l'on polymérise l'isobutène ou un mélange de monomères contenant de l'isobutène en présence
(A) d'un complexe donneur de trihalogénure d'aluminium agissant comme catalyseur de polymérisation ou d'un complexe donneur d'halogénure d'alkylaluminium, qui contient comme donneur un composé organique ayant au moins une fonction éther ou une fonction ester d'acide carboxylique, notamment avec utilisation conjointe d'un initiateur,
polymérise, hydroformyle le homopolymère ou copolymère d'isobutène hautement réactif résultant avec un catalyseur approprié en présence de monoxyde de carbone et d'hydrogène, puis procède à une amination réductrice en présence d'au moins n équivalents d'ammoniac ou d'une mono- ou polyamine.

15. Procédé pour la préparation de dérivés d'homopolymères ou de copolymères d'isobutène de la formule générale I, dans laquelle A représente un groupe polaire de faible masse moléculaire contenant une fonction dérivé d'acide carboxylique, notamment une fonction imide d'acide carboxylique, selon les revendications 1 à 13, **caractérisé en ce que** l'on polymérise l'isobutène ou un mélange de monomères contenant de l'isobutène en présence
(A) d'un complexe donneur de trihalogénure d'aluminium agissant comme catalyseur de polymérisation ou d'un complexe donneur d'halogénure d'alkylaluminium, qui contient comme donneur un composé organique ayant au moins une fonction éther ou une fonction ester d'acide carboxylique, notamment avec utilisation conjointe d'un initiateur,
polymérise, fait réagir le homopolymère ou copolymère d'isobutène hautement réactif résultant avec un acide dicarboxylique C₄ à C₁₂ éthyléniquement insaturé ou un dérivé réactif de celui-ci, notamment avec l'anhydride maléique, thermiquement ou par catalyse halogénée, et
le cas échéant convertit ensuite avec une mono- ou polyamine en le dérivé amide d'acide carboxylique ou imide d'acide carboxylique correspondant, le dérivé amide d'acide carboxylique ou imide d'acide carboxylique résultant pouvant encore être modifié par réaction ultérieure avec au moins un anhydride d'acide dicarboxylique C₂ à C₁₂, avec au moins un carbonate d'alkylène C₂ à C₄ et/ou avec de l'acide borique.

16. Procédé pour la préparation de dérivés d'homopolymères ou de copolymères d'isobutène de la formule générale I, dans laquelle A représente un groupe polaire de faible masse moléculaire contenant une fonction amine, selon les revendications 1 à 13, **caractérisé en ce que** l'on polymérise l'isobutène ou un mélange de monomères contenant de l'isobutène en présence
(A) d'un complexe donneur de trihalogénure d'aluminium agissant comme catalyseur de polymérisation ou d'un Complexe donneur d'halogénure d'alkylaluminium, lequel contient comme donneur un composé organique ayant au moins une fonction éther ou une fonction ester d'acide carboxylique-contenant une fonction ester d'acide carboxylique, notamment avec utilisation d'un amorceur,
polymérisé, convertit le homopolymère ou copolymère d'isobutène hautement réactif résultant avec un phénol en l'alkylphénol correspondant et le transforme ensuite par réaction avec un aldéhyde et une amine primaire ou secondaire en le produit d'addition de Mannich correspondant.
